# EUROPEAN PATENT APPLICATION

(11) **EP 4 538 787 A1**
(43) Date of publication of application: **16.04.2025**
(21) Application number: 23820048.9
(22) Date of filing: 01.06.2023
(51) Int. Cl.: G03B 5/04, G03B 17/12, G03B 30/00

(54) **CAMERA ACTUATOR AND CAMERA MODULE INCLUDING SAME**

(30) Priority: 08.06.2022 KR 20220069451
(71) Applicant: LG INNOTEK CO. LTD, Gangseo-gu Seoul 07796 (KR)
(72) Inventor: LEE, Hee Se, Seoul 07796 (KR)
(74) Representative: Plasseraud IP
(86) International application number: PCT/KR2023/007536
(87) International publication number: WO 2023/239112

(57) **Abstract**

An embodiment of the present invention discloses a camera actuator including a housing, a lens assembly which moves in an optical axis direction from the housing, a ball part positioned between the housing and the lens assembly, and a driving part which moves the lens assembly, wherein the lens assembly includes a lens holder including at least one lens, a rail part including a side plate on which the ball part is mounted and a wing part extending from the side plate, and an adhesive member disposed between the rail part and the lens holder.

## Description

### [Technical Field]

The present invention relates to a camera actuator and a camera module including the same.

### [Background Art]

Cameras are devices which capture images or moving images of subjects and are installed in portable devices, drones, vehicles, and the like. In order to improve the quality of an image, a camera device may have an image stabilization (IS) function which corrects or prevents image shake caused by a user's movement, an auto focusing (AF) function which automatically adjusts a distance between an image sensor and a lens to arrange a focal length of the lens, and a zooming function which increases or decreases a magnification of a subject using a zoom lens to capture an image of a distant subject.

However, a plurality of lenses should be arranged to accurately perform a zooming function, an AF function, and the like in a camera module and improve optical performance.

### [Disclosure]

### [Technical Problem]

The present invention is directed to providing a camera actuator including a plurality of lenses or lens group on which an optical axis alignment is performed, and a camera device.

**In** addition, the present invention is directed to providing a camera actuator in which a lens assembly of an autofocus (AF)/zoom camera actuator is miniaturized and of which the reliability is improved by absorbing shock, and a camera device.

**In** addition, the present invention is directed to providing a camera actuator of which a glass of a first lens assembly is prevented from being broken, and a camera device.

The present invention is directed to providing a camera actuator applicable to ultra-slim, ultra-compact, and high-resolution cameras.

The objects of embodiments are not limited thereto and may also include objects or effects that may be identified from the configurations or embodiments to be described below.

### [Technical Solution]

According to an aspect of the present invention, there is provided a camera actuator including a housing, a lens assembly which moves in an optical axis direction from the housing, a ball part positioned between the housing and the lens assembly, and a driving part which moves the lens assembly, where the lens assembly includes a lens holder including at least one lens, a rail part including a side plate on which the ball part is mounted and a wing part extending from the side plate, and an adhesive member disposed between the rail part and the lens holder.

The wing part may be in contact with the adhesive member and the side plate.

The wing part may be disposed on a front end or rear end of the lens holder.

The wing part may include a wing hole.

The adhesive member may have a closed loop or open loop structure.

The adhesive member may include a member hole.

**In** the wing part, a thickness of each of an upper portion and a lower portion may differ from a thickness of a side portion.

The wing part, the adhesive member, and the lens holder may overlap in the optical axis direction.

The wing part may be disposed above or under the lens holder.

The adhesive member may overlap the wing part and the lens holder.

A thickness of the adhesive may vary in the optical axis direction.

The lens holder may include a lens holder surface in contact with the wing part.

The lens holder surface may include a convex portion which is convex outward and a flat portion.

The adhesive member may overlap the lens holder, the side plate, and the wing part.

The adhesive member may overlap the ball part.

### [Advantageous Effects]

According to embodiments of the present invention, a camera actuator including a plurality of lenses or lens group on which an optical axis alignment is performed, and a camera device can be implemented.

**In** addition, the present invention can implement a camera actuator in which a lens assembly of an AF/zoom camera actuator is miniaturized and of which the reliability is improved by absorbing shock, and a camera device.

In addition, the present invention can implement a camera actuator of which a glass of a first lens assembly is prevented from being broken, and a camera device.

In addition, the present invention can implement a camera actuator applicable to ultra-slim, ultra-compact, and high-resolution cameras.

Various useful advantages and effects of the present invention are not limited to the above-described contents, and may have been more easily understood in the above-described specific embodiments of the present invention.

### [Description of Drawings]

FIG. 1 is a perspective view illustrating a camera module according to an embodiment;
FIG. 2 is an exploded perspective view illustrating the camera module according to the embodiment;
FIG. 3 is a view illustrating the camera module along line AA' in FIG. 1;
FIG. 4A is a perspective view illustrating a first camera actuator according to the embodiment;
FIG. 4B is an exploded perspective view illustrating the first camera actuator according to the embodiment;
FIG. 5A is a perspective view illustrating the first camera actuator according to the embodiment;
FIG. 5B is a view illustrating the first camera actuator along line PP' in FIG. 5A;
FIG. 5C is a view illustrating the first camera actuator along line QQ' in FIG. 5A;
FIG. 6A is a perspective view illustrating the first camera actuator according to the embodiment;
FIG. 6B is a view illustrating the first camera actuator along line SS' in FIG. 6A;
FIG. 6C is an exemplary view illustrating movement of the first camera actuator illustrated in FIG. 6B;
FIG. 7A is a view illustrating the first camera actuator along line RR' in FIG. 6A;
FIG. 7B is an exemplary view illustrating movement of the first camera actuator illustrated in FIG. 7A;
FIG. 8 is a perspective view illustrating a second camera actuator according to the embodiment;
FIG. 9 is an exploded perspective view illustrating the second camera actuator according to the embodiment;
FIG. 10 is a cross-sectional view illustrating the second camera actuator along line DD' in FIG. 8;
FIGS. 11A, 11B, and 11C are perspective views illustrating a second housing in the second camera actuator according to the embodiment;
FIGS. 12 and 13 are views for each describing operation of a lens assembly according to the embodiment;
FIG. 14 is a view for describing operation of the second camera actuator according to the embodiment;
FIG. 15 is a schematic view illustrating a circuit substrate according to the embodiment;
FIG. 16 is a perspective view illustrating a first lens assembly and a second lens assembly according to a first embodiment;
FIG. 17 is a perspective view illustrating a first lens holder, a first rail part, and a first adhesive member in the first lens assembly according to the first embodiment;
FIG. 18 is a front view illustrating the first lens holder, the first rail part, and the first adhesive member in the first lens assembly according to the first embodiment;
FIG. 19 is a top view illustrating the first lens holder, the first rail part, and the first adhesive member in the first lens assembly according to the first embodiment;
FIG. 20 is a view illustrating the first lens assembly and the second lens assembly along line II' in FIG. 16;
FIG. 21 is a front view illustrating a first lens holder, a first rail part, and a first adhesive member in a first lens assembly according to a second embodiment;
FIG. 22 is a front view illustrating a first lens holder, a first rail part, and a first adhesive member in a first lens assembly according to a third embodiment;
FIG. 23 is a top view illustrating a first lens holder, a first rail part, and a first adhesive member in a first lens assembly according to a fourth embodiment;
FIG. 24A is a front view illustrating the first lens holder, the first rail part, and the first adhesive member in the first lens assembly according to the fourth embodiment;
FIG. 24B is a view illustrating a modified example of FIG. 24A;
FIG. 25 is a top view illustrating a first lens holder, a first rail part, and a first adhesive member in a first lens assembly according to a fifth embodiment;
FIG. 26 is a rear view illustrating the first lens holder, the first rail part, and the first adhesive member in the first lens assembly according to the fifth embodiment;
FIG. 27 is a schematic view illustrating a first lens assembly, a second housing, and a first adhesive member according to a sixth embodiment;
FIG. 28 is a cross-sectional view illustrating the first lens assembly, the second housing, and the first adhesive member according to the sixth embodiment;
FIG. 29 is a rear view illustrating the first lens assembly, the second housing, and the first adhesive member according to the sixth embodiment;
FIG. 30 is a schematic view illustrating a first lens assembly, a second housing, and a first adhesive member according to a seventh embodiment;
FIG. 31 is a perspective view illustrating a mobile terminal to which a camera module according to an embodiment is applied; and
FIG. 32 is a perspective view illustrating a vehicle to which the camera module according to the embodiment is applied.

### [Modes of the Invention]

Since the present invention allows various changes and has many embodiments, specific embodiments will be illustrated in the accompanying drawings and described. However, this is not intended to limit the present invention to the specific embodiments, and it is to be appreciated that all changes, equivalents, and substitutes that fall within the spirit and technical scope of the present invention are encompassed in the present invention.

Although the terms "second," "first," and the like may be used herein to describe various elements, these elements should not be limited by these terms. These terms are only used to distinguish one element from another element. For example, a second element could be called a first element, and a first element could similarly be called a second element without departing from the scope of the present invention. The term "and/or" includes any one or any combination among a plurality of associated listed items.

When an element is referred to as being "connected" or "coupled" to another element, it will be understood that the element may be directly connected or coupled to another element, or other elements may be present therebetween. In contrast, when an element is referred to as being "directly connected" or "directly coupled" to another element, it will be understood that there are no intervening elements.

Terms used in this application are used only to describe a particular embodiment and are not intended to limit the present invention. Singular expressions include plural expressions, unless the context clearly means otherwise. In the present application, the terms "include" and "have" are intended to specify the existence of a feature, number, step, motion, component, part or combination thereof described in the specification, but one or more other features or numbers, steps, motions, components, parts or combinations thereof.

Unless otherwise defined, all terms including technical and scientific terms used herein have meanings that are the same as meanings generally understood by those skilled in the art. Terms, such as those defined in commonly used dictionaries, should be interpreted as having meanings that are consistent with their meanings in the context of the relevant art and will not be interpreted in an idealized or overly formal sense unless expressly so defined here.

Hereinafter, embodiments will be described in detail with reference to the accompanying drawings, components that are the same or correspond to each other will be denoted by the same or corresponding reference numerals regardless of symbols of the accompanying drawings, and redundant descriptions will be omitted.

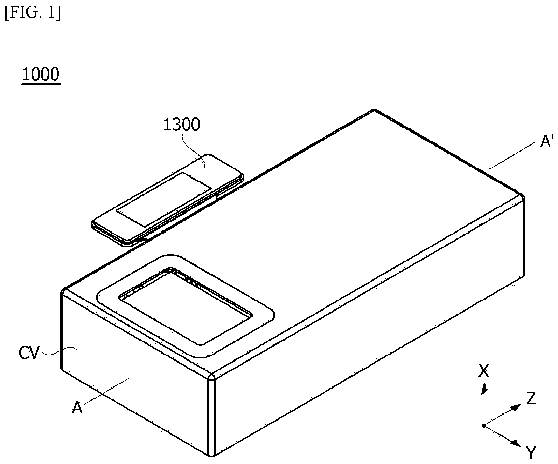

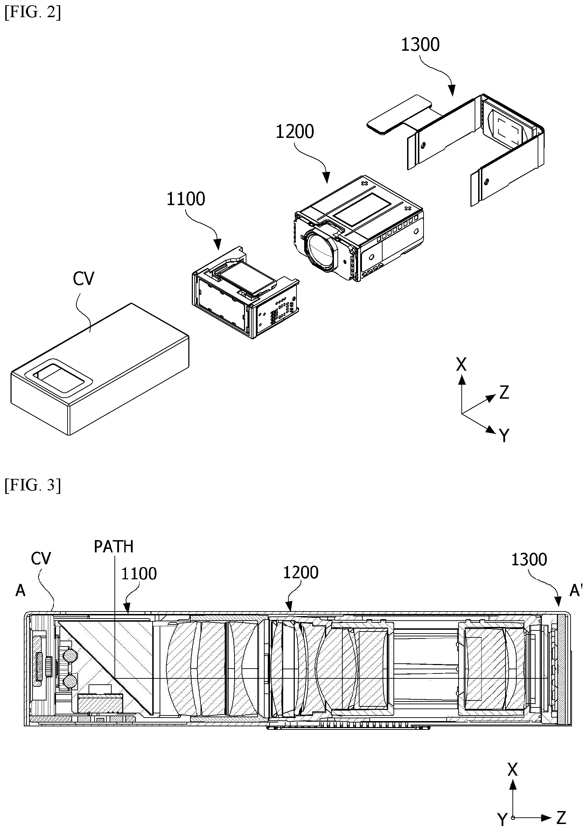

FIG. 1 is a perspective view illustrating a camera module according to an embodiment, FIG. 2 is an exploded perspective view illustrating the camera module according to the embodiment, and FIG. 3 is a view illustrating the camera module along line AA' in FIG. 1.

Referring to FIGS. 1 and 2, a camera module 1000 according to the embodiment may include a cover CV, a first camera actuator 1100, a second camera actuator 1200, and a circuit substrate 1300. In this case, the first camera actuator 1100 may be used interchangeably with a first actuator, and the second camera actuator 1200 may be used interchangeably with a second actuator.

The cover CV may cover the first camera actuator 1100 and the second camera actuator 1200. A coupling force between the first camera actuator 1100 and the second camera actuator 1200 can be improved by the cover CV.

In addition, the cover CV may be formed of a material which blocks electromagnetic waves. Accordingly, the first camera actuator 1100 and the second camera actuator 1200 in the cover CV can be easily protected.

In addition, the first camera actuator 1100 may be an optical image stabilization (OIS) actuator. For example, the first camera actuator 1100 may move an optical member in a direction perpendicular to an optical axis (an axis of incident light).

The first camera actuator 1100 may include a fixed focal length lens disposed in a predetermined barrel (not shown). The fixed focal length lens may also be referred to as a "single focal length lens" or "single lens."

The first camera actuator 1100 may change an optical path. In the embodiment, the first camera actuator 1100 may change an optical path in a perpendicular direction using an internal optical member (for example, a prism or mirror). Due to such a configuration, even when a thickness of a mobile terminal is reduced, a lens of which a thickness is greater than the thickness of the mobile terminal may be disposed in the mobile terminal through changing an optical path, and thus magnification, auto-focusing (AF), zoom, and OIS functions can be performed.

However, the present invention is not limited thereto, and the first camera actuator 1100 may change an optical path several times in a perpendicular direction or at certain angles.

The second camera actuator 1200 may be disposed on a rear end of the first camera actuator 1100. The second camera actuator 1200 may be coupled to the first camera actuator 1100. In addition, the coupling therebetween may be implemented in one of various manners.

In addition, the second camera actuator 1200 may be a zoom actuator or AF actuator. For example, the second camera actuator 1200 may support a single or plurality of lenses and may perform an AF or zoom function by moving the lens according to a control signal of a predetermined control unit.

In addition, the single of or plurality of lenses independently or separately move along an optical axis direction.

The circuit substrate 1300 may be disposed on a rear end of the second camera actuator 1200. The circuit substrate 1300 may be electrically connected to the second camera actuator 1200 and the first camera actuator 1100. In addition, the circuit substrate 1300 may be provided as a plurality of circuit substrates 1300.

The camera module according to the embodiment may be provided as a single camera module or a plurality of camera modules. For example, the plurality of camera modules may include a first camera module and a second camera module.

In addition, the first camera module may include a single or plurality of actuators. For example, the first camera module may include the first camera actuator 1100 and the second camera actuator 1200.

In addition, the second camera module may be disposed in a predetermined housing (not shown) and may include an actuator (not shown) capable of driving a lens part. The actuator may be a voice coil motor, a micro-actuator, a silicon actuator, or the like, and one of various method such as an electrostatic type, a thermal method, a bimorph method, and an electrostatic method may be applied to the actuator, and the present invention is not limited thereto. In addition, in the present specification, the camera actuator may be referred to as an actuator or the like. In addition, the camera module provided as the plurality of camera modules may be mounted in one of various electronic devices such as mobile terminals. In addition, the actuator may be a device which moves or tilts a lens and an optical member. However, hereinafter, the actuator will be described as a concept including a lens or an optical member. In addition, the actuator may be referred to as a "lens-transferring device," "lens-moving device," "optical member-transferring device," "optical member-moving device," or the like.

Referring to FIG. 3, the camera module according to the embodiment may include the first camera actuator 1100 which performs an OIS function and the second camera actuator 1200 which performs a zooming function and an AF function.

Light may enter the camera module or the first camera actuator through an aperture region positioned on an upper surface of the first camera actuator 1100. That is, the light enters the first camera actuator 1100 in the optical axis direction (for example, in an X axis direction based on incident light), and an optical path may be changed to a perpendicular direction (for example, in a Z axis direction) by an optical member. In addition, the light may pass through the second camera actuator 1200 and may enter an image sensor IS positioned on one end of the second camera actuator 1200 (PATH). In the present specification, the Z axis or third direction will be described as the optical axis direction as will be described below.

In the present specification, a lower surface is one side in a first direction. In addition, the first direction is the X axis direction in the drawings and may be used interchangeably with a second axis direction or the like. A second direction is a Y axis direction in the drawings and may be used interchangeably with a first axis direction. The second direction is perpendicular to the first direction. In addition, the third direction is the Z axis direction in the drawings and may be used interchangeably with a third axis direction. In addition, the third direction is a direction perpendicular to both the first direction and the second direction. In this case, the third direction (Z axis direction) corresponds to a direction of an optical axis, and the first direction (X axis direction) and the second direction (Y axis direction) are directions perpendicular to the optical axis. In addition, hereinafter, in the description about the first and second camera actuators, the optical axis direction is the third direction (Z axis direction) and the first and second camera actuators will be described below based thereon.

In addition, in the present specification, the term "inward" is a direction from the cover CV to the first camera actuator, and the term "outward" may be a direction opposite to "inward." That is, the first camera actuator and the second camera actuator may be positioned inward from the cover CV, and the cover CV may be positioned outward from the first camera actuator or the second camera actuator.

In addition, due to such a configuration, in the camera module according to the embodiment, an optical path may be changed to solve spatial limitations of the first camera actuator and the second camera actuator. That is, in the camera module according to the embodiment, as an optical path is changed, a thickness of the camera module may be minimized, and thus the optical path may extend. In addition, it should be understood that the second camera actuator may also provide a wide range of magnification by controlling a focus and the like in the increased optical path.

In addition, the camera module according to the embodiment may implement an OIS function by controlling an optical path using the first camera actuator, and thus occurrence of a descent or tilt phenomenon can be minimized, and best optical characteristics can be obtained.

In addition, the second camera actuator 1200 may include an optical system and a lens driving part. For example, at least one among a first lens assembly, a second lens assembly, and a third lens assembly may be disposed in the second camera actuator 1200.

In addition, the second camera actuator 1200 may include a coil and a magnet to perform a high-magnification zooming function and an AF function.

For example, each of the first lens assembly and the second lens assembly may be a moving lens moved using a coil, a magnet, and a guide pin, and the third lens assembly may be a fixed lens, but the present invention is not limited thereto. For example, the third lens assembly may perform a function of a focator which collects light to form an image at a specific position, and the first lens assembly may perform a function of a variator which reforms an image, which is formed through the third lens assembly which is a concentrator, at another position. Meanwhile, the first lens assembly may be in a state in which a change in magnification is large because a distance to a subject or an image distance is greatly changed, and the first lens assembly, which is a variator, may play an important role in changing a focal length or magnification of the optical system. Meanwhile, an image point at which an image is formed through the first lens assembly, which is the variator, may slightly vary according to a position. Accordingly, the second lens assembly may perform a position compensation function for the image formed by the variator. For example, the second lens assembly may perform a function of a compensator which serves to accurately form the image formed by the first lens assembly, which is the variator, at an actual position of the image sensor. For example, each of the first lens assembly and the second lens assembly may be driven by an electromagnetic force generated due to an interaction between a coil and a magnet. The above-described contents may be applied to a lens assembly which will be described below. In addition, the first lens assembly to the third lens assembly may move in the optical axis direction, that is, the third direction. In addition, the first lens assembly to the third lens assembly may move in the third direction independently or in conjunction with each other. In the present invention, the first lens assembly and the second lens assembly may move in the optical axis direction. In addition, the third lens assembly may be positioned on a front end of the first lens assembly or a rear end of the second lens assembly. In addition, the third lens assembly may not move in the optical axis direction. That is, the third lens assembly may be a fixed part. In addition, each of the first and second lens assemblies may be a moving part.

Meanwhile, when the OIS actuator and the AF/zoom actuator are disposed according to the embodiment of the present invention, magnetic field interference with an AF/zoom magnet may be prevented when an OIS function is performed. Since a first driving magnet of the first camera actuator 1100 is separately disposed from the second camera actuator 1200, magnetic field interference between the first camera actuator 1100 and the second camera actuator 1200 may be prevented. In the present specification, OIS may be interchangeably used with terms such as hand shake correction, optical image stabilization, optical image correction, and shaking correction.

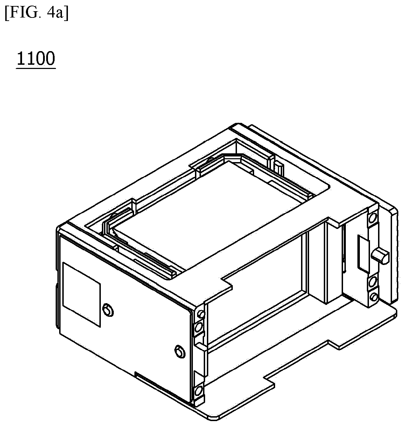

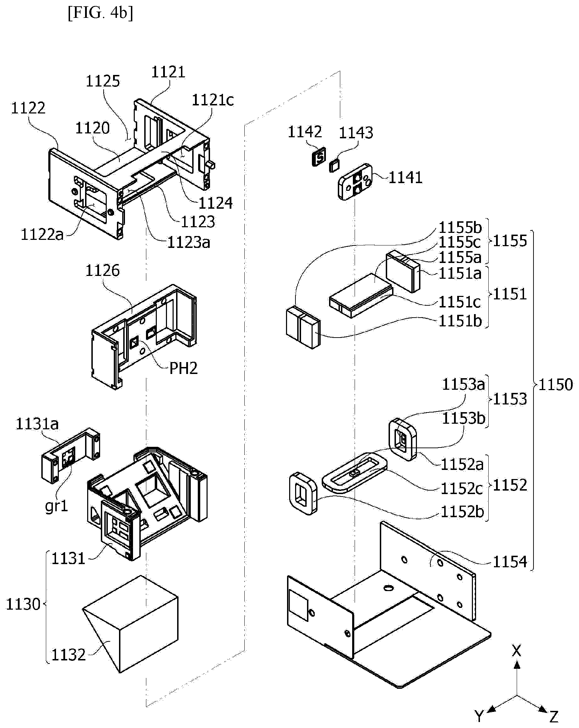

FIG. 4A is a perspective view illustrating the first camera actuator according to the embodiment, and FIG. 4B is an exploded perspective view illustrating the first camera actuator according to the embodiment.

Referring to FIG. 4A and FIG. 4B, the first camera actuator 1100 according to the embodiment includes a first housing 1120, a mover 1130, a rotary part 1140, a first driving part 1150, a first member 1126, and a second member 1131a.

The mover 1130 may include a holder 1131 and an optical member 1132 which is mounted in the holder 1131. In addition, the rotary part 1140 may include a tilting guide part 1141 and a second magnetic part 1142 and a first magnetic part 1143 which have the same polarity or different polarities to press the tilting guide part 1141. For example, in the first magnetic part 1143 and the second magnetic part 1142, polarities of surfaces facing each other may be the same. In addition, the first driving part 1150 includes driving magnets 1151, driving coils 1152, a Hall sensor part 1153, a first substrate part 1154, and a yoke part 1155.

First, the first camera actuator 1100 may include a shield can (not shown). The shield can (not shown) may be positioned at an outermost side of the first camera actuator 1100 and positioned to surround the rotary part 1140 and the first driving part 1150 which will be described below.

Such a shield can (not shown) may block or reduce electromagnetic waves generated from the outside. That is, the shield can (not shown) can reduce the number of occurrences of a malfunction in the rotary part 1140 or first driving part 1150.

The first housing 1120 may be positioned in the shield can (not shown). When there is no shield can, the first housing 1120 may be positioned at an outermost side of the first camera actuator.

**In** addition, the first housing 1120 may be positioned inside the first substrate part 1154 which will be described below. The first housing 1120 may be fitted to or engaged with the shield can (not shown) to be fastened thereto.

The first housing 1120 may include a first housing side portion 1121, a second housing side portion 1122, a third housing side portion 1123, and a fourth housing side portion 1124. Details thereof will be described below.

The first member 1126 may be disposed in the first housing 1120. The second member 1131a may pass through some regions of the first member 1126. The first member 1126 may be disposed in the housing. The first member 1126 may be integrated with or separated from the first housing 1120.

The mover 1130 includes the holder 1131 and the optical member 1132 mounted in the holder 1131.

The holder 1131 may be mounted in an accommodation portion 1125 of the first housing 1120. The holder 1131 may include a first holder outer surface to a fourth holder outer surface corresponding to the first housing side portion 1121, the second housing side portion 1122, the third housing side portion 1123, and the first member 1126, respectively. For example, the first holder outer surface to the fourth holder outer surface may correspond to or face inner surfaces of the first housing side portion 1121, the second housing side portion 1122, the third housing side portion 1123, and the first member 1126, respectively.

In addition, the holder 1131 may include the second member 1131a disposed in a fourth mounting groove. The second member 1131a may pass through the first member 1126 and may be coupled to the holder 1131. Detailed thereof will be described below.

The optical member 1132 may be mounted in the holder 1131. To this end, the holder 1131 may have a mounting surface, and the mounting surface may be formed by an accommodation groove. In the embodiment, the optical member 1132 may be formed of a mirror or prism. Hereinafter, although the optical member 1132 is described based on the prism but may be provided as a plurality of lenses as in the above-described embodiment. Alternatively, the optical member 1132 may be formed of a plurality of lenses and a prism or mirror. In addition, the optical member 1132 may include a reflective part disposed therein. However, the present invention is not limited thereto.

In addition, the optical member 1132 may reflect light reflected from the outside (for example, an object) into the camera module. In other words, the optical member 1132 may solve spatial limitations of the first camera actuator and the second camera actuator by changing a reflected optical path. Accordingly, it should be understood that the camera module may also provide a high magnification by extending an optical path while minimizing the thickness of the camera module.

In addition, the second member 1131a may be coupled to the holder 1131. The second member 1131a may be disposed outside the holder 1131 and inside the housing. In addition, the second member 1131a may be mounted in an additional groove positioned in a region other than the fourth mounting groove in the fourth holder outer surface in the holder 1131. Accordingly, the second member 1131a may be coupled to the holder 1131, and at least a part of the first member 1126 may be positioned between the second member 1131a and the holder 1131. For example, at least a part of the first member 1126 may be disposed in a space formed between the second member 1131a and the holder 1131. In addition, as described above, the second member 1131a may pass through holes formed in the first member 1126.

In addition, the second member 1131a may be formed in a structure separate from the holder 1131. Due to such a configuration, as will be described below, the first camera actuator may be easily assembled. Alternatively, the second member 1131a may be integrally formed with the holder 1131 but will be described as a separate structure below.

The rotary part 1140 includes the tilting guide part 1141 and the second magnetic part 1142 and the first magnetic part 1143 which have the same polarity to press the tilting guide part 1141.

The tilting guide part 1141 may be coupled to the mover 1130 and the first housing 1120. Specifically, the tilting guide part 1141 may be disposed between the holder 1131 and the first member 1126. Accordingly, the tilting guide part 1141 may be coupled to the mover 1130 of the holder 1131 and the first housing 1120. However, unlike the above-described content, in the present embodiment, the tilting guide part 1141 may be disposed between the first member 1126 and the holder 1131. Specifically, the tilting guide part 1141 may be positioned between the first member 1126 and the fourth mounting groove of the holder 1131. For example, at least a part of the tilting guide part 1141 may be positioned in the fourth mounting groove.

The second member 1131a, the first member 1126, the tilting guide part 1141, and the holder 1131 may be sequentially disposed in the third direction (Z axis direction). In addition, the second magnetic part 1142 and the first magnetic part 1143 may mounted in a first groove gr1 formed in the second member 1131a and a second groove gr2 formed in the first member 1126, respectively. In the present embodiment, positions of the first groove gr1 and the second groove gr2 may differ from positions of first and second grooves. However, the first groove gr1 is positioned in the second member 1131a and integrally moves with the holder and the second member 1131a, and the second groove gr2 is positioned in the first member 1126 to correspond to the first groove gr1 and is coupled to the first housing 1120. Accordingly, these terms are described interchangeably with each other. In addition, the first groove and the second groove may be grooves as described above. Alternatively, each of the first groove and the second groove may be replaced with a hole type.

In addition, the tilting guide part 1141 may be disposed adjacent to an optical axis. Accordingly, the actuator according to the embodiment may easily change an optical path according to first and second axis tilts which will be described below.

The tilting guide part 1141 may include first protruding parts disposed to be spaced apart from each other in the first direction (X axis direction) and second protruding parts disposed to be spaced apart from each other in the second direction (Y axis direction). In addition, the first protruding parts and the second protruding parts may protrude in directions opposite to each other. The first protruding parts and the second protruding parts may include a plurality of protrusions, balls, or rolling members.

In addition, as described above, the second magnetic part 1142 may be positioned in the second member 1131a. In addition, the first magnetic part 1143 may be positioned in the first member 1126.

The second magnetic part 1142 and the first magnetic part 1143 may have the same polarity. For example, the second magnetic part 1142 may be a magnet having an N-pole, and the first magnetic part 1143 may be a magnet having an N-pole. Conversely, the second magnetic part 1142 may be a magnet having an S-pole, and the first magnetic part 1143 may be a magnet having an S-pole

For example, a first pole surface of the first magnetic part 1143 and a second pole surface of the second magnetic part 1142 facing the first pole surface may have the same polarity.

The second magnetic part 1142 and the first magnetic part 1143 may generate a repulsive force therebetween due to the polarity. Due to such a configuration, the repulsive force may be applied to the second member 1131a coupled to the second magnetic part 1142 or the holder 1131 and the first member 1126 coupled to the first magnetic part 1143 or the first housing 1120. In this case, the repulsive force applied to the second member 1131a may be transmitted to the holder 1131 coupled to the second member 1131a. Accordingly, the tilting guide part 1141 disposed between the second member 1131a and the first member 1126 may be pressed by the repulsive force. That is, the repulsive force may maintain a state in which the tilting guide part 1141 is positioned between the holder 1131 and the first housing 1120 (or the first member 1126). Due to such a configuration, relative positions between the mover 1130 and the first housing 1120 may be maintained even when an X axis tilt or Y axis tilt is performed. In addition, the tilting guide part may be in close contact with the first member 1126 and the holder 1131 by the repulsive force between the first magnetic part 1143 and the second magnetic part 1142. In other words, the repulsive force generated by the first magnetic part 1143 and the second magnetic part 1142 may be a force for maintaining relative positions between the holder 1131 and the first housing 1120.

The first driving part 1150 includes the driving magnets 1151, the driving coils 1152, the Hall sensor part 1153, the first substrate part 1154, and the yoke part 1155. Contents thereof will be described below. In addition, the yoke part 1155 may be referred to as a "first yoke part" in the first camera actuator. In addition, a yoke part in the second camera actuator may be referred to as a "second yoke part."

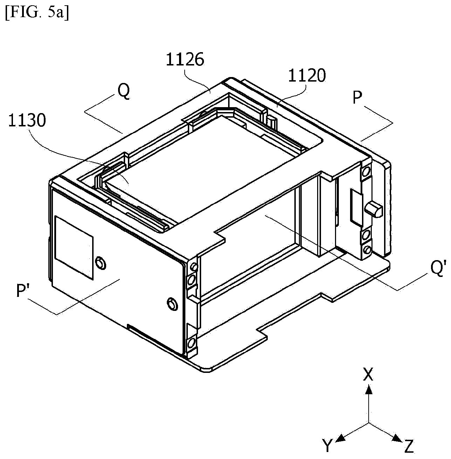

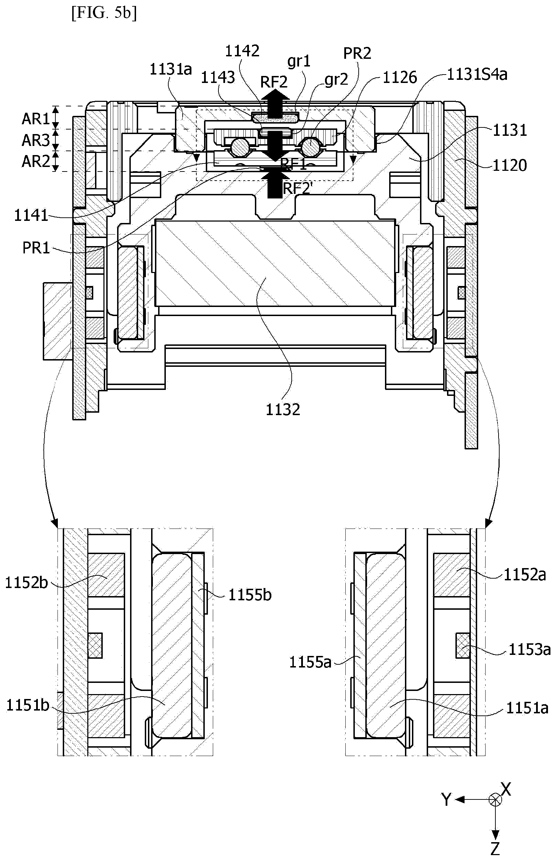

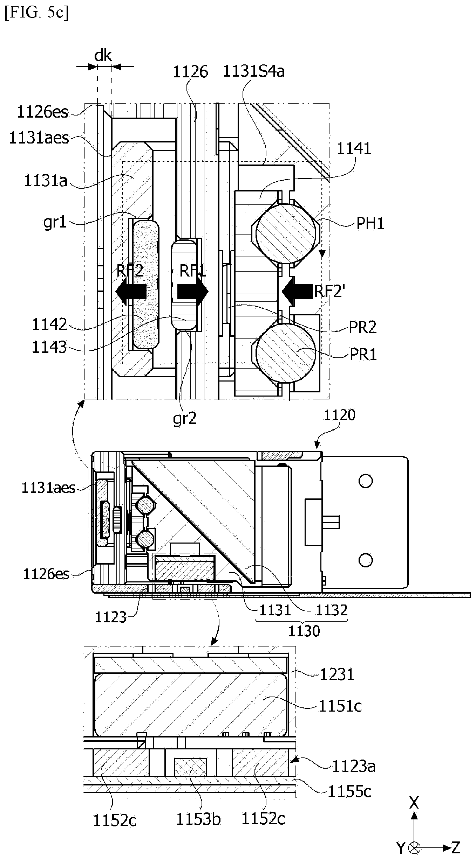

FIG. 5A is a perspective view illustrating the first camera actuator according to the embodiment, FIG. 5B is a view illustrating the first camera actuator along line PP' in FIG. 5A, and FIG. 5C is a view illustrating the first camera actuator along line QQ' in FIG. 5A.

Referring to FIGS. 5A to 5C, a third coil 1152a may be positioned in the first housing side portion 1121, and a third magnet 1151a may be positioned on a first holder outer surface 1131S1 of the holder 1131. Accordingly, the third coil 1152a and the third magnet 1151a may be positioned to face each other. At least a part of the third magnet 1151a may overlap the third coil 1152a in the second direction (Y axis direction).

In addition, a fourth coil 1152b may be positioned in the second housing side portion 1122, and a fourth magnet 1151b may be positioned on a second holder outer surface 1131S2 of the holder 1131. Accordingly, the fourth coil 1152b and the fourth magnet 1151b may be positioned to face each other. At least a part of the fourth magnet 1151b may overlap the fourth coil 1152b in the second direction (Y axis direction).

In addition, the third coil 1152a and the fourth coil 1152b may overlap in the second direction (Y axis direction), and the third magnet 1151a and the fourth magnet 1151b may overlap in the second direction (Y axis direction).

Due to such a configuration, an electromagnetic force applied to the outer surfaces (the first holder outer surface and the second holder outer surface) of the holder is applied along an axis parallel to the second direction (Y axis direction), and thus an X axis tilt may be accurately and precisely performed.

In addition, second protruding parts PR2a and PR2b of the tilting guide part 1141 may be in contact with the first member 1126 of the first housing 1120. Second protruding parts PR2 may be mounted in second protrusion grooves PH2 formed in one side surface of the first member 1126. In addition, when an X axis tilt is performed, the second protruding parts PR2a and PR2b may be a reference axis (or rotation axis) of the tilt. Accordingly, the tilting guide part 1141 and the mover 1130 may move in the second direction.

In addition, a first Hall sensor 1153a may be positioned outside for electrical connection and coupling to the first substrate part 1154 as described above. However, the present invention is not limited to the position.

In addition, a fifth coil 1152c may be positioned in the third housing side portion 1123, and a fifth magnet 1151c may be positioned on a third holder outer surface 1131S3 of the holder 1131. At least a part of the fifth coil 1152c and the fifth magnet 1151c may overlap in the first direction (X axis direction). Accordingly, a magnitude of an electromagnetic force between the fifth coil 1152c and the fifth magnet 1151c may be easily controlled.

The tilting guide part 1141 may be positioned on a fourth holder outer surface 1131S4 of the holder 1131 as described above. In addition, the tilting guide part 1141 may be mounted in a fourth mounting groove 1131S4a of the fourth holder outer surface. As described above, the fourth mounting groove 1131S4a may include a first region AR1, a second region AR2, and a third region AR3.

The second member 1131a may be disposed in the first region AR1, and the second member 1131a may include the first groove gr1 formed in an inner surface of the second member 1131a. In addition, as described above, the second magnetic part 1142 may be disposed in the first groove gr1, and a repulsive force RF2 generated by the second magnetic part 1142 may be transmitted to the fourth mounting groove 1131S4a of the holder 1131 through the second member 1131a (RF2'). Accordingly, the holder 1131 may apply a force to the tilting guide part 1141 in the same direction as the repulsive force RF2 generated by the second magnetic part 1142.

The first member 1126 may be disposed in the second region AR2. The first member 1126 may include the second groove gr2 facing the first groove gr1. In addition, the first member 1126 may include the second protrusion grooves PH2 disposed in a surface corresponding to the second groove gr2. In addition, a repulsive force RF1 generated by the first magnetic part 1143 may be applied to the first member 1126. Accordingly, the first member 1126 and the second member 1131a may press the tilting guide part 1141 disposed between the first member 1126 and the holder 1131 using the generated repulsive forces RF1 and RF2'. Accordingly, coupling between the holder 1131, the first housing 1120, and the tilting guide part 1141 may be maintained even after the X axis tilt or Y axis tilt of the holder is performed using a current applied to the third and fourth coils or fifth coil 1152c.

The tilting guide part 1141 may be disposed in the third region AR3. The tilting guide part 1141 may include first protruding parts PR1 and the second protruding parts PR2 as described above. In this case, the first protruding parts PR1 and the second protruding parts PR2 may also be disposed on a second surface 1141b and a first surface 1141a of a base BS, respectively. As described above, in the other embodiments which will be described below, first protruding parts PR1 and second protruding parts PR2 may be variously positioned on surfaces facing each other on a base BS.

First protrusion grooves PH1 may be positioned in the fourth mounting groove 1131S4a. In addition, the first protruding parts PR1 of the tilting guide part 1141 may be accommodated in the first protrusion grooves PH1. Accordingly, the first protruding parts PR1 may be in contact with the first protrusion grooves PH1. A maximum diameter of each of the first protrusion grooves PH1 may correspond to a maximum diameter of each of the first protruding parts PR1. This may be equally applied to the second protrusion grooves PH2 and the second protruding parts PR2. That is, a maximum diameter of each of the second protrusion grooves PH2 may correspond to a maximum diameter of each of the second protruding parts PR2. In addition, the second protruding parts PR2 may be in contact with the second protrusion grooves PH2. Due to such a configuration, a first axis tilt centered on the first protruding parts PR1 and a second axis tilt centered on the second protruding parts PR2 can be easily performed, and a radius of the tilt may be increased.

In addition, the tilting guide part 1141 may be disposed to be parallel to the second member 1131a and the first member 1126 in the third direction (Z axis direction), and thus the tilting guide part 1141 may overlap the optical member 1132 in the first direction (X axis direction). More specifically, in the embodiment, the first protruding part PR1 may overlap the optical member 1132 in the first direction (X axis direction). In addition, at least a part of the first protruding part PR1 may overlap the fifth coil 1152c or the fifth magnet 1151c in the first direction (X axis direction). That is, each protruding part which is a center axis of tilt in the camera actuator according to the embodiment may be positioned adjacent to a weight center of the mover 1130. Accordingly, the tilting guide part may be positioned adjacent to a weight center of the holder. Accordingly, the camera actuator according to the embodiment may minimize a moment value of tilting the holder, and a consumption amount of a current applied to the coil part and the like to tilt the holder may be minimized, and thus power consumption can be reduced, and the reliability of the device can be improved.

In addition, the second magnetic part 1142 and the first magnetic part 1143 may not overlap the fifth coil 1152c or the optical member 1132 in the first direction (X axis direction). In other words, in the embodiment, the second magnetic part 1142 and the first magnetic part 1143 may be disposed to be spaced apart from the fifth coil 1152c or the optical member 1132 in the third direction (Z axis direction). Accordingly, in the fifth coil 1152c, a magnetic force received from the second magnetic part 1142 and the first magnetic part 1143 may be minimized. Accordingly, the camera actuator according to the embodiment may easily perform vertical driving (Y axis tilt) and minimize power consumption.

In addition, as described above, a second Hall sensor 1153b positioned inside the fifth coil 1153c may detect a change in magnetic flux to perform relative position sensing between the fifth magnet 1151c and the second Hall sensor 1153b. In this case, an offset voltage of the second Hall sensor 1153b may be changed according to an influence of a magnetic field formed by the second magnetic part 1142 and the first magnetic part 1143.

In the first camera actuator according to the embodiment, the second member 1131a, the second magnetic part 1142, the first magnetic part 1143, the first member 1126, the tilting guide part 1141, and the holder 1131 may be sequentially disposed in the third direction. However, since the second magnetic part is positioned in the second member and the first magnetic part is positioned in the first member, the second member, the first member, the tilting guide part, and the holder may be sequentially disposed.

In addition, in the embodiment, separation distances of the second magnetic part 1142 and the first magnetic part 1143 from the holder 1131 (or the optical member 1132) may be greater than separation distances thereof from the tilting guide part 1141 in the third direction. Accordingly, the second Hall sensor 1153b under the holder 1131 may also be disposed to be spaced predetermined distances from the second magnetic part 1142 and the first magnetic part 1143. Accordingly, an influence of a magnetic field formed by the second magnetic part 1142 and the first magnetic part 1143 on the second Hall sensor 1153b may be minimized to prevent a Hall voltage from being concentrated and saturated to a positive or negative voltage. That is, such a configuration allows a Hall electrode to have a range in which Hall Calibration is performed. In addition, a temperature is also affected by an electrode of a Hall sensor, and a resolution of a camera lens varies according to the temperature, but in the embodiment, since the case in which the Hall voltage is concentrated to the positive or negative voltage is prevented, correction for a resolution of a lens is also performed to correspond thereto, and thus degradation of resolution can be easily prevented.

In addition, a circuit for compensating for offset to output power (that is, the Hall voltage) of the second Hall sensor 1153b may also be easily designed.

In addition, according to the embodiment, a partial region of the tilting guide part 1141 may be positioned outside the fourth holder outer surface of the holder 1131.

The tilting guide part 1141 may be mounted in the fourth mounting groove 1131S4a based on the base BS except for the first protruding parts PR1 and the second protruding parts PR2. In other words, a length of the base BS in the third direction (Z axis direction) may be smaller than a length of the fourth mounting groove 1131S4a in the third direction (Z axis direction). Due to such a configuration, miniaturization may be facilitated.

In addition, a maximum length of the tilting guide part 1141 in the third direction (Z axis direction) may be greater than the length of the fourth mounting groove 1131S4a in the third direction (Z axis direction). Accordingly, as described above, an end of the second protruding part PR2 may be positioned between the fourth holder outer surface and the first member 1126. That is, at least a part of the second protruding part PR2 may be positioned in a direction opposite to the third direction (Z axis direction) with respect to the holder 1131. In other words, the holder 1131 may be spaced a predetermined distance from the end (a portion in contact with the second protrusion groove) of the second protruding part PR2 in the third direction (Z axis direction).

In addition, a front surface 1131aes of the second member 1131a according to the embodiment may be spaced apart from a front surface 1126es of the first member 1126. Particularly, the front surface 1131aes of the second member 1131a according to the embodiment may be positioned toward the third direction (Z axis direction) on the front surface 1126es of the first member 1126. Alternatively, the front surface 1131aes of the second member 1131a according to the embodiment may be positioned inside the front surface 1126es of the first member 1126. To this end, the first member 1126 may have a structure extending and bending inward. In addition, a partial region of the second member 1131a may be positioned in a groove formed in the extended and bent structure of the first member 1126.

Due to such a configuration, the second member 1131a is positioned inside the first member 1126, and thus a spatial efficiency can be improved, and miniaturization can be implemented. In addition, even when the driving (tilt or rotation of the mover1130) is performed by an electromagnetic force, the second member 1131a does not protrude outward from the first member 1126, and thus the second member 1131a may be prevented from coming into contact with elements therearound. Accordingly, the reliability thereof can be improved.

In addition, there may be a predetermined separation space between the second magnetic part 1142 and the first magnetic part 1143. In other words, the second magnetic part 1142 and the first magnetic part 1143 may have the same polarity and may face each other.

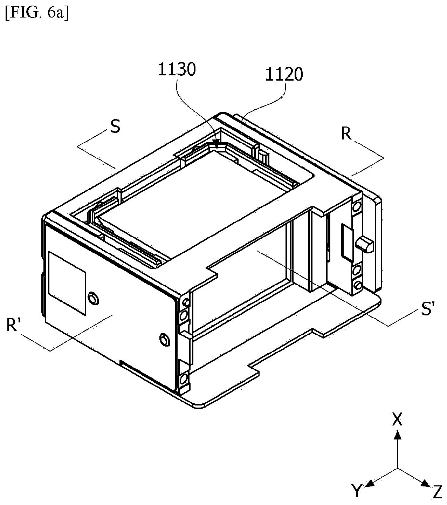

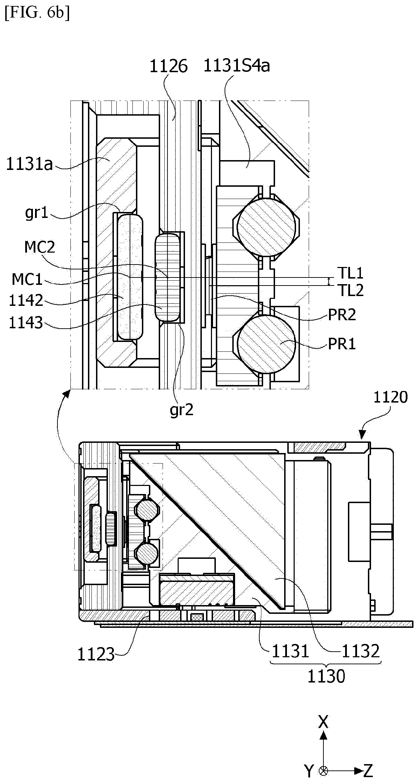

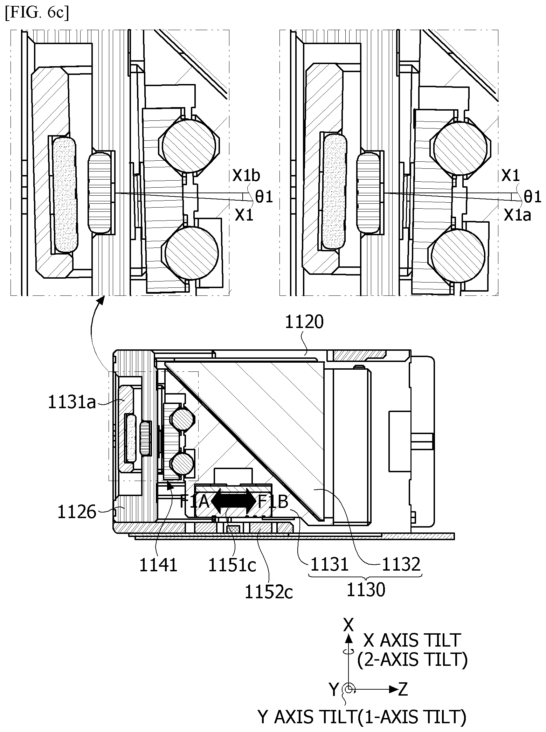

FIG. 6A is a perspective view illustrating the first camera actuator according to the embodiment, FIG. 6B is a view illustrating the first camera actuator along line SS' in FIG. 6A, and FIG. 6C is an exemplary view illustrating movement of the first camera actuator illustrated in FIG. 6B.

Referring to FIGS. 6A to 6C, a Y axis tilt may be performed in the first camera actuator according to the embodiment. That is, rotation may be performed in the first direction (X axis direction) to implement an OIS function.

In the embodiment, the fifth magnet 1151c disposed in a lower portion of the holder 1131 may generate an electromagnetic force with the fifth coil 1152c to tilt or rotate the mover 1130 with respect to the second direction (Y axis direction).

Specifically, a repulsive force between the second magnetic part 1142 and the first magnetic part 1143 is transmitted to the second member 1131a and the first member 1126, and finally transmitted to the tilting guide part 1141 disposed between the first member 1126 and the holder 1131. Accordingly, the tilting guide part 1141 may be pressed by the mover 1130 and the first housing 1120 due to the repulsive force.

In addition, the second protruding part PR2 may be supported by the first member 1126. In this case, in the embodiment, the tilting guide part 1141 may rotate or tilt with respect to the second protruding part PR2, which protrudes toward the first member 1126, as a reference axis (rotation axis), that is, with respect to the second direction (Y axis direction). In other words, the tilting guide part 1141 may rotate or tilt with respect to the second protruding part PR2, which protrudes toward the first member 1126, as the reference axis (rotation axis) in the first direction (X axis direction).

For example, while the mover 1130 is rotated (X1→X1a) at a first angle θ1 in the X axis direction by first electromagnetic forces F1A and F1B between the fifth magnet 1151c disposed in a third mounting groove and the fifth coil 1152c disposed on a third substrate side portion, an OIS function may be implemented

Conversely, while the mover 1130 is rotated (X1-X1b) at a first angle θ1 in a direction opposite to the X axis direction by first electromagnetic forces F1A and F1B between the fifth magnet 1151c disposed in the third mounting groove and the fifth coil 1152c disposed on the third substrate side portion, an OIS function may be implemented.

The first angle θ1 may be ±1° to ±3°. However, the present invention is not limited thereto.

In a first camera actuator according to the following various embodiments, an electromagnetic force may be generated in a described direction to move a mover, or even when an electromagnetic force is generated in another direction, the electromagnetic force may move a mover. That is, a direction of a described electromagnetic force is a direction of a force generated by a magnet and a coil to move a mover. For example, the first electromagnetic forces F1A and F1B may be applied in the third direction or a direction opposite to the third direction.

In addition, a center MC1 of the second magnetic part 1142 and a center MC2 of the first magnetic part 1143 may be disposed side by side in the third direction (Z axis direction). In other words, a center line TL1 connecting the center MC1 of the second magnetic part 1142 and the center MC2 of the first magnetic part 1143 may be parallel to the third direction (Z axis direction).

In addition, a bisector TL2 which bisects the second protruding part PR2 and corresponds in the third direction (Z axis direction) may be parallel to the center line TL1. In other words, the bisector TL2 may be a line bisecting the second protruding part PR2 in the first direction (X axis direction) and may be provided as a plurality of bisectors TL2.

In the embodiment, the bisector TL2 may be disposed to be spaced apart from the center line TL1 in the first direction (X axis direction). The bisector TL2 may be positioned above the center line TL1. Due to such a configuration, a separation distance from the bisector TL2 to the fifth coil 1152c or the fifth magnet 1151c is increased, and thus a more accurate two-axis tilt of the holder can be performed. **In** addition, a position of the holder can be equally maintained when a current is not applied to the coil.

More specifically, since the center MC1 of the second magnetic part 1142 and the center MC2 of the first magnetic part 1143 are spaced apart from the bisector TL2 in the first direction (X axis direction), a force (for example, a repulsive force) between the second magnetic part 1142 and the first magnetic part 1143 may be applied to be spaced apart from the bisector TL2 corresponding to an optical axis in the first direction (X axis direction). **In** addition, a momentum is generated on the mover 1130 by the force. However, when the center MC1 of the second magnetic part 1142 and the center MC2 of the first magnetic part 1143 are positioned on the bisector TL2, there is a problem that, after tilt is performed, positions of the tilting guide part and the second magnetic part 1142 are not maintained when calibration is performed. That is, in the camera actuator according to the embodiment, since the center MC1 of the second magnetic part 1142 and the center MC2 of the first magnetic part 1143 are not disposed on the bisector TL2, the positions of the tilting guide part and the second magnetic part 1142 can be maintained after tilt or rotation is performed.

In another example, a center MC1 of a second magnetic part 1142 and center MC2 of a first magnetic part 1143 may be disposed to be spaced apart from each other in a first direction (X axis direction).

In addition, the center MC1 of the second magnetic part 1142 and the center MC2 of the first magnetic part 1143 may not be positioned on a bisector TL2. For example, the center MC1 of the second magnetic part 1142 and the center MC2 of the first magnetic part 1143 may be positioned above the bisector TL2.

Accordingly, a separation distance from the bisector TL2 to a fifth coil 1152c or a fifth magnet 1151c is increased, a more accurate two-axis tilt of the holder may be performed. In addition, a position of the holder may be equally maintained when a current is not applied to the coil.

In addition, lengths of the second magnetic part 1142 and the first magnetic part 1143 may be different in the first direction (X axis direction).

In the embodiment, an area of the second magnetic part 1142 which is coupled to the second member 1131a and tilted together with the mover 1130 may be greater than an area of the first magnetic part 1143. For example, a length of the second magnetic part 1142 in the first direction (X axis direction) may be greater than a length of the first magnetic part 1143 in the first direction (X axis direction). In addition, a length of the second magnetic part 1142 in the second direction (Y axis direction) may be greater than a length of the first magnetic part 1143 in the second direction (Y axis direction). In addition, the first magnetic part 1143 may be positioned between virtual straight lines extending from two ends of the second magnetic part 1142 in the third direction.

Due to such a configuration, when tilting or rotating is performed, even when one magnetic part (for example, the second magnetic part) is tilted, generation of a force other than a vertical force due to the tilting may be easily prevented. That is, even when the second magnetic part vertically tilts together with the mover 1130, the second magnetic part may not receive a force (for example, a repulsive force or attractive force) applied against the tilt from the first magnetic part 1143. Accordingly, a driving efficiency can be improved.

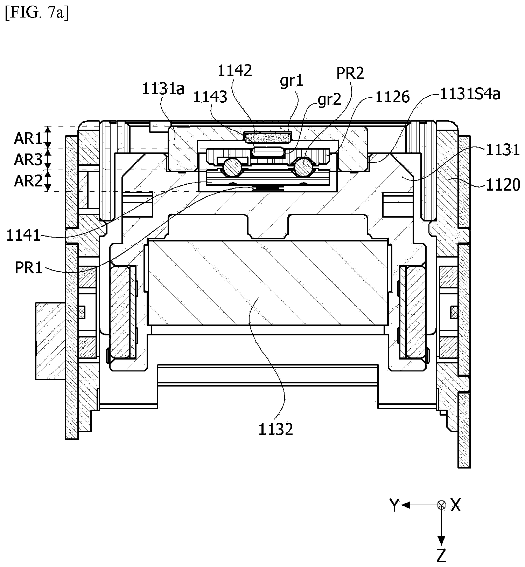

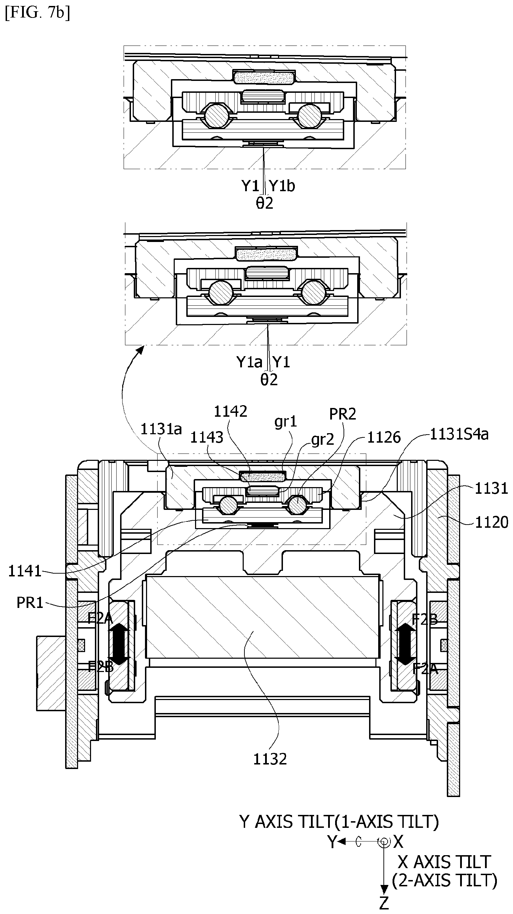

FIG. 7A is a view illustrating the first camera actuator along line RR' in FIG. 6A, and FIG. 7B is an exemplary view illustrating movement of the first camera actuator illustrated in FIG. 7A.

Referring to FIGS. 7A and 7B, an X axis tilt may be performed. That is, the mover 1130 may be tilted or rotated in the Y axis direction to implement an OIS function.

In the embodiment, the third magnet 1151a and the fourth magnet 1151b which are disposed in the holder 1131 may generate electromagnetic forces with the third coil 1152a and the fourth coil 1152b, respectively, to tilt or rotate the tilting guide part 1141 and the mover 1130 with respect to the first direction (X axis direction).

Specifically, a repulsive force between the second magnetic part 1142 and the first magnetic part 1143 may be transmitted to the first member 1126 and the holder 1131 and finally transmitted to the tilting guide part 1141 disposed between the holder 1131 and the first member 1126. Accordingly, the tilting guide part 1141 may be pressed by the mover 1130 and the first housing 1120 due to the repulsive force.

In addition, a 1-1 protruding part PR1a and a 1-2 protruding part PR1b may be spaced apart from each other in the first direction (X axis direction) and supported by the first protrusion grooves PH1 formed in the fourth mounting groove 1131S4a of the holder 1131. In addition, in the embodiment, the tilting guide part 1141 may be rotated or tilted with respect to the first protruding parts PR1, which protrude toward the holder 1131 (for example, in the third direction), as a reference axis (rotation axis), that is, with respect to the first direction (X axis direction).

For example, while the mover 1130 is rotated (Y1→Y1a) at a second angle θ2 in the Y axis direction by second electromagnetic forces F2A and F2B between the third and fourth magnets 1151a and 1151b disposed in a first mounting groove and the third and fourth coils 1152a and 1152b disposed on first and second substrate side portions, an OIS function may be implemented. In addition, while the mover 1130 is rotated (Y1→Y1b) at a second angle θ in the Y axis direction by second electromagnetic forces F2A and F2B between the third and fourth magnets 1151a and 1151b disposed in the first mounting groove and the third and fourth coils 1152a and 1152b disposed on the first and second substrate side portions, an OIS function may be implemented. The second angle θ2 may be ±1° to 3°. However, the present invention is not limited thereto.

In addition, as described above, electromagnetic forces generated by the third and fourth magnets 1151a and 1151b and the third and fourth coils 1152a and 1152b may be applied in the third direction or a direction opposite to the third direction. For example, an electromagnetic force may be generated in the third direction (Z axis direction) from a left part of the mover 1130 and applied in a direction opposite to the third direction (Z axis direction) from a right part of the mover 1130. Accordingly, the mover 1130 may rotate with respect to the first direction. Alternatively, the mover 1130 may move in the second direction.

As described above, the first actuator according to the embodiment may control the mover 1130 to be rotated in the first direction (X axis direction) or second direction (Y axis direction) by an electromagnetic force between the driving magnet in the holder and the driving coil disposed in the first housing to minimize generation of a decent or tilt phenomenon and provide best optical properties when an OIS function is implemented. In addition, as described above, the term "Y axis tilt" is rotation or tilt in the first direction (X axis direction), and the term "X axis tilt" is rotation or tilt in the second direction (Y axis direction).

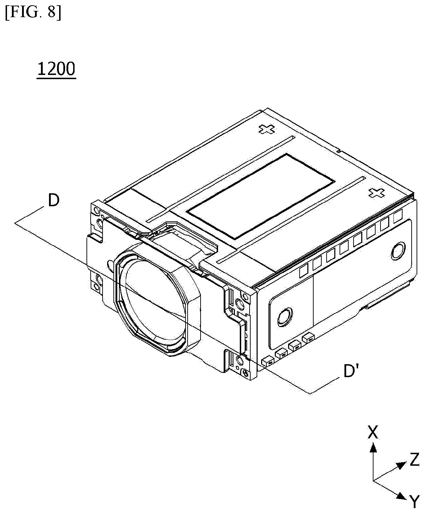

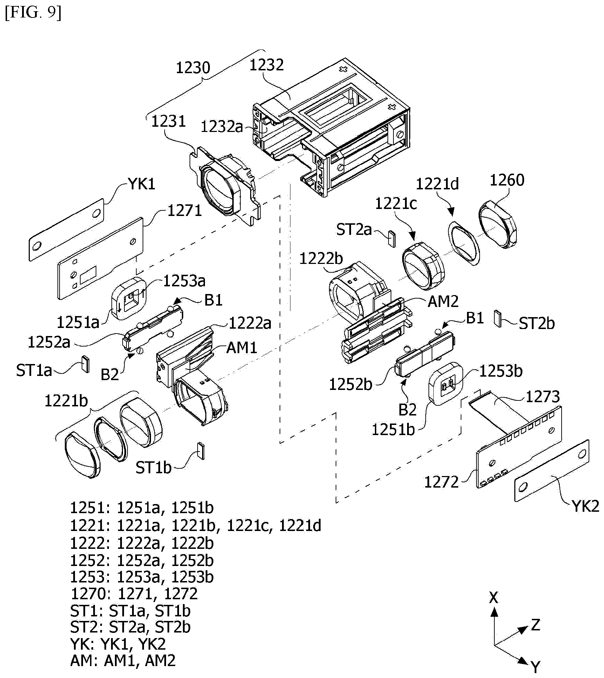

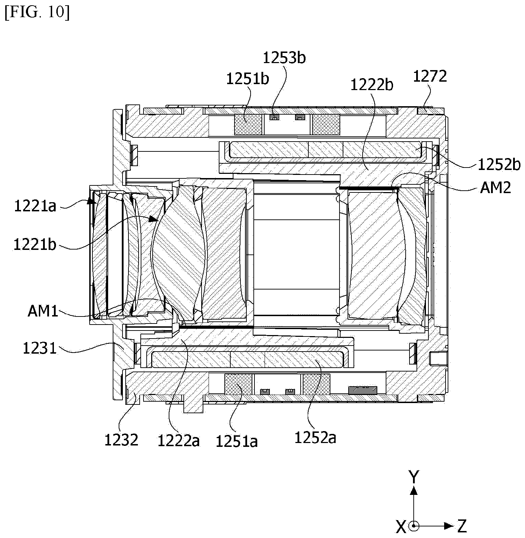

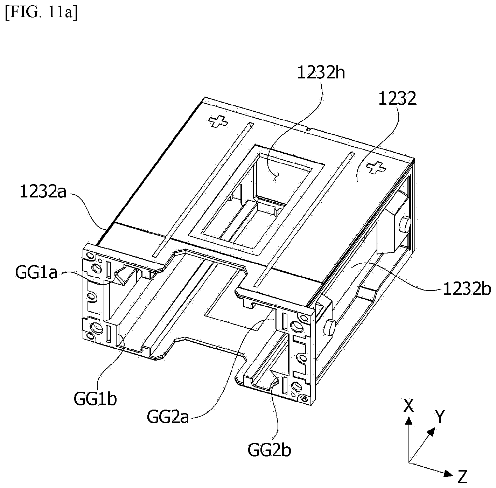

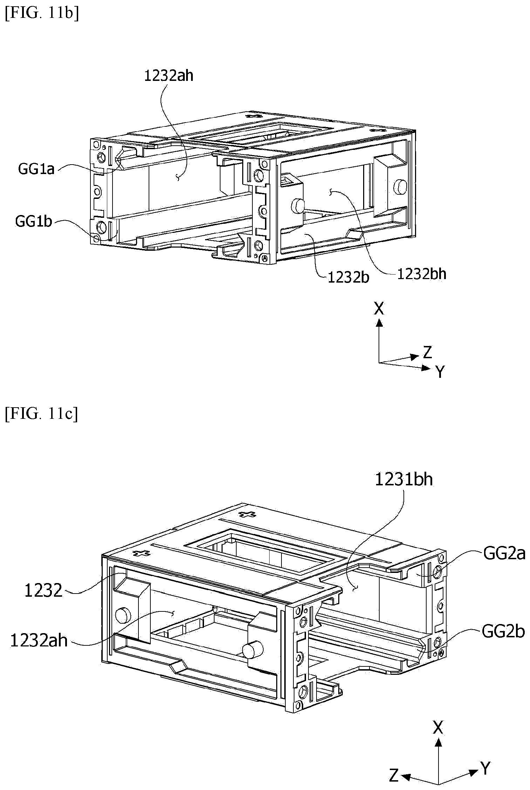

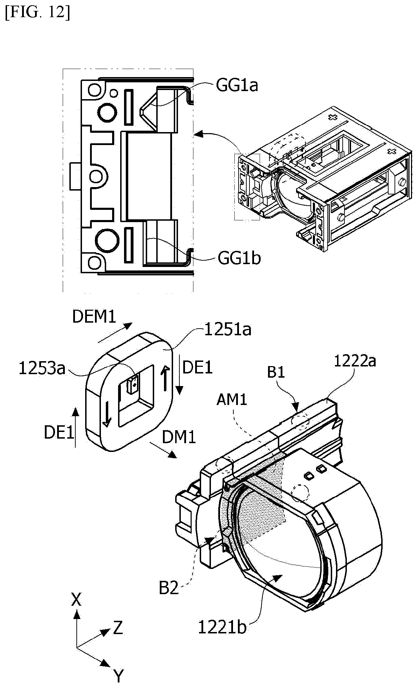

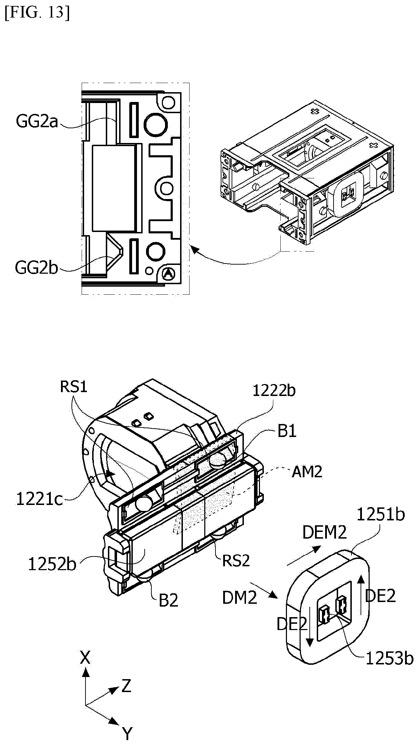

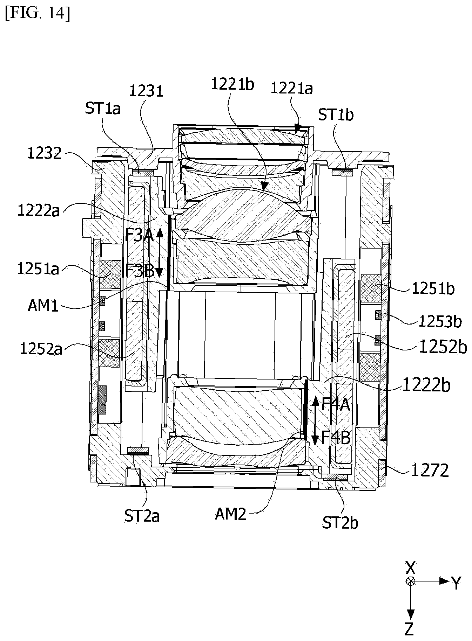

FIG. 8 is a perspective view illustrating the second camera actuator according to the embodiment, and FIG. 9 is an exploded perspective view illustrating the second camera actuator according to the embodiment. FIG. 10 is a cross-sectional view illustrating the second camera actuator along line DD' in FIG. 8, and FIGS. 11A, 11B, and 11C are perspective views illustrating the second housing in the second camera actuator according to the embodiment. FIGS. 12 and 13 are views for each describing operation of a lens assembly according to the embodiment, and FIG. 14 is a view for describing operation of the second camera actuator according to the embodiment.

Referring to FIGS. 8 to 10, the second camera actuator 1200 according to the embodiment includes a lens part 1220, a second housing 1230, a second driving part 1250, a base part 1260, a second substrate part 1270, an adhesive member AM, a stopper part ST, and a yoke part YK. In addition, the second camera actuator 1200 may further include a second shield can (not shown) and an elastic part (not shown).

The second shield can (not shown) is positioned on one region (for example, an outermost side) of the second camera actuator 1200 to surround the components (the lens part 1220, the second housing 1230, the second driving part 1250, the base part 1260, the second substrate part 1270, and the image sensor IS) which will be described below.

The second shield can (not shown) may block or reduce electromagnetic waves generated from the outside. Accordingly, the occurrence of a malfunction in the second driving part 1250 can be reduced.

The lens part 1220 may be positioned in the second shield can (not shown). The lens part 1220 may move in the third direction (Z axis direction or an optical axis direction). Accordingly, the AF function and the zoom function can be performed.

In addition, the lens part 1220 may be positioned in the second housing 1230. Accordingly, at least a part of the lens part 1220 may move in the optical axis direction or the third direction (Z axis direction) in the second housing 1230.

Specifically, the lens part 1220 may include a lens group 1221 and a moving assembly 1222.

First, the lens group 1221 may include at least one lens. In addition, the lens group 1221 may be provided as a plurality of lens group 1221 but will be described based on one lens group 1221.

The lens group 1221 may be coupled to the moving assembly 1222 and moved in the third direction (Z axis direction) by an electromagnetic force generated by a first magnet 1252a and a second magnet 1252b coupled to the moving assembly 1222.

In the embodiment, the lens group 1221 may include a first lens group 1221a, a second lens group 1221b, and a third lens group 1221c. The first lens group 1221a, the second lens group 1221b, and the third lens group 1221c may be sequentially disposed in the optical axis direction. In addition, the lens group 1221 may further include a fourth lens group 1221d. The fourth lens group 1221d may be disposed on a rear end of the third lens group 1221c.

The first lens group 1221a may be fixedly coupled to a 2-1 housing. In other words, the first lens group 1221a may not move in the optical axis direction.

The second lens group 1221b may be coupled to a first lens assembly 1222a to move in the third direction or optical axis direction. The first lens assembly 1222a and the second lens group 1221b may move to adjust a magnification.

The third lens group 1221c may be coupled to a second lens assembly 1222b to move in the third direction or optical axis direction. The third lens group 1221c may move to adjust a focus or perform AF.

However, the present invention is not limited to the number of the lens groups, and there is no above-described fourth lens group 1221d, or an additional lens group and the like may be further disposed in addition to the fourth lens group 1121d.

The moving assembly 1222 may include an aperture region surrounding the lens group 1221. The moving assembly 1222 is used interchangeably with a lens assembly. In addition, the moving assembly 1222 may be coupled to the lens group 1221 in one of various manners. In addition, the moving assembly 1222 may include grooves in side surfaces of the moving assembly 1222 and may be coupled to the first magnet 1252a and the second magnet 1252b through the grooves. A coupling member or the like may be applied in the grooves.

In addition, the elastic part (not shown) may be coupled to each of an upper end and a rear end of the moving assembly 1222. Accordingly, the moving assembly 1222 may be supported by the elastic part (not shown) while moving in the third direction (Z axis direction). That is, a position of the moving assembly 1222 may be maintained in the third direction (Z axis direction). The elastic part (not shown) may be formed of one of various elastic elements such as leaf springs.

The moving assembly 1222 may be positioned in the second housing 1230 and may include the first lens assembly 1222a and the second lens assembly 1222b. In addition, the moving assembly 1222 may be provides as a plurality of moving assemblies 1222, and at least one moving assembly 1222 may move in the optical axis direction. Hereinafter, at least one of the first lens assembly 1222a and the second lens assembly 1222b may include a lens holder including a lens, a side plate in which ball parts B1 and B2 seat, a rail part including a wing part extending from the side plate, and the adhesive member AM disposed between the rail part and the lens holder. The adhesive member AM may be cured by light (for example, ultraviolet (UV) light) after active alignment or optical axis alignment. For example, the adhesive member AM may include an epoxy or the like. Detailed thereof will be described below.

A region in which the third lens group is mounted in the second lens assembly 1222b may be positioned on a rear end of the first lens assembly 1222a. In other words, the region in which the third lens group 1221c is mounted in the second lens assembly 1222b may be positioned between a region in which the second lens group 1221b is mounted in the first lens assembly 1222a and the image sensor.

The first lens assembly 1222a and the second lens assembly 1222b may be mounted inside a 2-2 housing. For example, a recess in which a ball of the first lens assembly 1222a is disposed may be positioned to face a first side portion. **In** addition, a recess in which a ball of the second lens assembly 1222b is disposed may be positioned to face a second side portion. Detailed thereof will be described below.

In addition, second driving magnets may be mounted on outer surfaces of the first lens assembly 1222a and the second lens assembly 1222b. For example, the second magnet 1252b may be mounted on the outer surface of the second lens assembly 1222b. The first magnet 1252a may be mounted on the outer surface of the first lens assembly 1222a.

The second housing 1230 may be disposed between lens part 1220 and the second shield can (not shown). In addition, the second housing 1230 may be disposed to surround the lens part 1220.

The second housing 1230 may include a 2-1 housing 1231 and a 2-2 housing 1232. The 2-1 housing 1231 may be coupled to the first lens group 1221a and also coupled to the first camera actuator. The 2-1 housing 1231 may be positioned in front of the 2-2 housing 1232.

In addition, the 2-2 housing 1232 may be positioned on a rear end of the 2-1 housing 1231. The lens part 1220 may be mounted in the 2-2 housing 1232.

Holes may be formed in side portions of the second housing 1230 (or the 2-2 housing 1232). A first coil 1251a and a second coil 1251b may be disposed in the holes. The holes may be positioned to correspond to the grooves of the moving assembly 1222.

In the embodiment, the second housing 1230 (particularly, the 2-2 housing 1232) may include a first side portion 1232a and a second side portion 1232b. The first side portion 1232a and the second side portion 1232b may be positioned to correspond to each other. For example, the first side portion 1232a and the second side portion 1232b may be symmetrically disposed with respect to the third direction. Second driving coils 1251 may be positioned on the first side portion 1232a and the second side portion 1232b. In addition, the second substrate part 1270 may be mounted on each of outer surfaces of the first side portion 1232a and the second side portion 1232b. In other words, a first substrate 1271 may be positioned on the outer surface of the first side portion 1232a, and a second substrate 1272 may be positioned on the outer surface of the second side portion 1232b.

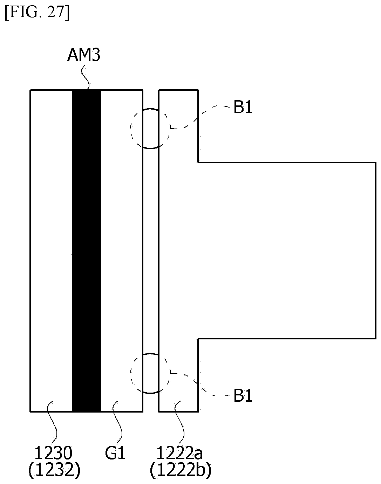

In addition, as another example, first and second guide grooves facing recesses (mounting grooves in which first and second balls are mounted) of the first lens assembly 1222a may be positioned in the first side portion. In addition, first and second guide grooves facing recesses of the second lens assembly 1222b may be positioned in the second side portion. In this case, a separate member (for example, a guide part) including first and second guide grooves may be coupled to the 2-2 housing 1232. However, the present embodiment will be described with reference to an integrated structure in which the first and second guide grooves are formed in the 2-2 housing 1232. In addition, in FIGS. 27 to 38, a structure in which a second house (or a 2-2 housing) and first and second guide grooves are separated will be described.

In addition, like another example, a first guide part and a second guide part may be positioned to correspond to each other. For example, the first guide part and the second guide part may be positioned opposite to each other in the third direction (Z axis direction). In addition, at least a part of the first guide part and the second guide part may overlap in the second direction (Y axis direction).

Each of the first guide part and the second guide part may include at least one groove (for example, a guide groove) or recess. In addition, the first balls B1 or the second balls B2 may be mounted in the groove or recess. Accordingly, the first balls B1 or the second balls B2 may move in the third direction (Z axis direction) in the guide groove of the first guide part or the guide groove of the second guide part.

Alternatively, the first balls B1 or the second balls B2 may move in the third direction along a rail formed inside the first side portion 1232a of the second housing 1230 or a rail formed inside the second side portion 1232b of the second housing 1230.

Accordingly, the first lens assembly 1222a and the second lens assembly 1222b may move in the third direction.

According to the embodiment, each of the first balls B1 may be disposed on the first lens assembly 1222a or the second lens assembly 1222b. Each of the second balls B2 may be disposed under the first lens assembly 1222a or the second lens assembly 1222b. For example, the first ball B1 may be positioned above the second ball B2. Accordingly, at least a part of the first ball B1 may overlap the second ball B2 in the first direction (X axis direction) according to position.

In addition, the 2-2 housing 1232 may include first guide grooves GG1a and GG2a facing first recesses RS1. In addition, the 2-2 housing 1232 may include second guide grooves GG1b and GG2b facing second recesses RS2. The first guide grooves GG1a and GG2a and the second guide grooves GG1b and GG2b may be grooves extending in the third direction (Z axis direction). In addition, the first guide grooves GG1a and GG2a and the second guide grooves GG1b and GG2b may be the grooves having different shapes. For example, the first guide grooves GG1a and GG2a may be grooves of which side surfaces are inclined, and the second guide grooves GG1b and GG2b may be grooves of which side surfaces are perpendicular to lower surfaces.

The first magnet and the first coil may be positioned on the first side portion. In addition, the second magnet and the second coil may be positioned on the second side portion. In addition, the second magnet 1252b may be positioned to face the second coil 1251b. In addition, the first magnet 1252a may be positioned to face the first coil 1251a.

The elastic part (not shown) may include a first elastic member (not shown) and a second elastic member (not shown). The first elastic member (not shown) may be coupled to an upper surface of the moving assembly 1222. The second elastic member (not shown) may be coupled to a lower surface of the moving assembly 1222. **In** addition, the first elastic member (not shown) and the second elastic member (not shown) may be formed of leaf springs as described above. **In** addition, the first elastic member (not shown) and the second elastic member (not shown) may provide elasticity for movement of the moving assembly 1222. However, the present invention is not limited to the positions thereof, and the elastic part may be disposed at various positions.

In addition, the second driving part 1250 may provide a driving force to move the lens part 1220 in the third direction (Z axis direction). The second driving part 1250 may include the second driving coils 1251 and the second driving magnets 1252. In addition, the second driving part 1250 may further include a second Hall sensor part. A second Hall sensor part 1253 may include at least one fourth Hall sensor 1253a and may be positioned inside or outside the second driving coils 1251.

The moving assembly may be moved in the third direction (Z axis direction) by an electromagnetic force generated between the second driving coils 1251 and the second driving magnets 1252.

The second driving coils 1251 may include the first coil 1251a and the second coil 1251b. The first coil 1251a and the second coil 1251b may be disposed in the holes formed in the side portions of the second housing 1230. The first coil 1251a and the second coil 1251b may be electrically connected to the second substrate part 1270. Accordingly, the first coil 1251a and the second coil 1251b may receive currents through the second substrate parts 1270.

The second driving magnets 1252 may include the first magnet 1252a and the second magnet 1252b. The first magnet 1252a and the second magnet 1252b may be disposed in the grooves of the moving assembly 1222 and may be positioned to correspond to the first coil 1251a and the second coil 1251b.

The base part 1260 may be positioned between the lens part 1220 and the image sensor IS. Components such as a filter may be fixed to the base part 1260. In addition, the base part 1260 may be disposed to surround the image sensor. Due to such a configuration, the image sensor is free from foreign matter and the like, and thus the reliability of the device can be improved. However, in some drawings below, the description will be done without a base part 1260. However, the present invention may not be limited to such a structure.

In addition, the second camera actuator 1200 may be a zoom actuator and an AF actuator. For example, the second camera actuator supports one or more lenses and may perform at least one of the AF and zoom functions by moving the lens according to a control signal of a predetermined control unit.

In addition, the second camera actuator may be a fixed zoom or continuous zoom actuator. For example, the second camera actuator may move the lens group 1221.

In addition, the second camera actuator may be formed of the plurality of lens assemblies. For example, in the second camera actuator, at least one of a third lens assembly (not shown) and a guide pin (not shown) may be disposed in addition to the first lens assembly 1222a and the second lens assembly 1222b. The above-described content may be applied thereto. Accordingly, the second camera actuator may perform a high-magnification zooming function using the second driving part. For example, the first lens assembly 1222a and the second lens assembly 1222b may be moving lenses moved by the second driving part and the guide pin (not shown), and the third lens assembly (not shown) may be a fixed lens, but the present invention is not limited thereto. For example, the third lens assembly (not shown) may perform a function of a focator which collects light to form an image at a specific position, and the first lens assembly may perform a function of a variator which reforms the image, which is formed through the third lens assembly (not shown), at another position. Meanwhile, the first lens assembly may be in a state in which a change in magnification is large because a distance to a subject or an image distance is greatly changed, and the first lens assembly, which is a variator, may play an important role in changing a focal length or magnification of the optical system. Meanwhile, an image point at which an image is formed through the first lens assembly, which is the variator, may slightly vary according to a position. Accordingly, the second lens assembly may perform a position compensation function for the image formed through the variator. For example, the second lens assembly may perform a function of a compensator which serves to accurately form an image formed through the first lens assembly, which is the variator, at an actual position of the image sensor. However, a configuration of the present embodiment will be described based on the following drawings.

The image sensor may be positioned inside or outside the second camera actuator. In the embodiment, the image sensor may be positioned outside the second camera actuator as illustrated. For example, the image sensor may be positioned on the circuit substrate. The image sensor may receive light and convert the received light into an electrical signal. In addition, the image sensor may be formed in an array type of a plurality of pixels. In addition, the image sensor may be positioned on the optical axis.

The second substrate part 1270 may be in contact with each of the side portions of the second housing. For example, the second substrate part 1270 may be positioned on the second housing, particularly, each of the outer surface (first side surface) of the first side portion and the outer surface of (second side surface) of the second side portion of the 2-2 housing and may be in contact with each of the first side surface and the second side surface.

The stopper part ST includes a first stopper ST1 disposed on one end and a second stopper ST2 disposed on the other end in the 2-2 housing 1232. The first stopper ST1 and the second stopper ST2 may be sequentially disposed in the optical axis direction.

In addition, the first stopper ST1 may be provided as a plurality of first stoppers ST1 disposed on a moving path of the first lens assembly and a moving path of the second lens assembly. For convenience, a 1-1 stopper ST1a and a 1-2 stopper ST1b will be described. Similarly, the second stopper ST2 may be provided as a plurality of second stoppers ST2 disposed on the moving path of the first lens assembly and the moving path of the second lens assembly. In addition, a 2-1 stopper ST2a and a 2-2 stopper ST2b will be described.

The 1-1 stopper ST1a and the 2-1 stopper ST2a may be positioned on the moving path of the first lens assembly. The 1-2 stopper ST1b and the 2-2 stopper ST2b may be positioned on the moving path of the second lens assembly.

The 1-1 stopper ST1a and the 1-2 stopper ST1b may overlap in the second direction. Alternatively, the 1-1 stopper ST1a and the 1-2 stopper ST1b may be misaligned in the second direction.

In addition, the 2-1 stopper ST2a and the 2-2 stopper ST2b may be positioned to be misaligned in the second direction. A distance between the 1-1 stopper ST1a and the 2-1 stopper ST2a in the third direction may be smaller than a distance between the 1-2 stopper ST1b and the 2-2 stopper ST2b. This is a configuration which reflects the fact that a movable distance (stroke) of the first lens assembly is smaller than a movable distance (stroke) of the second lens assembly.

For example, the second yoke part or the yoke part YK may be disposed outside the second driving part. The second yoke part YK may include a first yoke YK1 and a second yoke YK2.

The first yoke YK1 and the second yoke YK2 may be disposed opposite to each other. For example, the first yoke YK1 and the second yoke YK2 may be positioned to correspond to each other with respect to the optical axis.

The first yoke YK1 may be positioned adjacent to the first coil 1251a. The second yoke YK2 may be positioned adjacent to the second coil 1251b. The first coil 1251a and the second coil 1251b may be positioned between the first yoke YK1 and the second yoke YK2. In addition, the first yoke YK1, the first coil 1251a, the second coil 1251b, and the second yoke YK2 may be sequentially disposed in one direction (for example, the second direction). The first yoke YK1 may generate an attractive force with the first magnet. In addition, the second yoke YK2 may generate an attractive force with the second magnet. Accordingly, postures of the first and second lens assemblies may be maintained.

In addition, a thickness of the first yoke YK1 and a thickness of the second yoke YK2 may change in some regions. Due to such a configuration, a magnetic force generated from the first and second magnets or the first and second coils may be suppressed from affecting the other magnets or coils. For example, the first yoke YK1 may suppress a magnetic force generated by the first magnet from being applied to the second magnet and the second coil.

Referring to FIGS. 11A, 11B, and 11C, as described above, the second housing 1230 (particularly, the 2-2 housing 1232) may include the first side portion 1232a and the second side portion 1232b. The first side portion 1232a and the second side portion 1232b may be positioned to correspond to each other. For example, the first side portion 1232a and the second side portion 1232b may be symmetrically disposed with respect to the third direction. The second driving coils may be positioned on the first side portion 1232a and the second side portion 1232b. In addition, the second substrate part may be mounted on each of the outer surface of the first side portion 1232a and the outer surface of the second side portion 1232b. The second substrate part may be positioned outside and electrically connected to the driving coils.

For example, the first substrate may be positioned on the outer surface of the first side portion 1232a, and the second substrate may be positioned on the outer surface of the second side portion 1232b.

In addition, the first guide grooves GG1a and GG1b in which the first and second balls are mounted may be formed in the inner surface of the first side portion 1232a. The first guide grooves GG1a and GG1b may face the first and second recesses. Similarly, the second guide grooves GG2a and GG2b in which the first and second balls are mounted may be positioned in the inner surface of the second side portion 1232b. The first guide grooves GG1a and GG1b may face the first and second recesses.

In addition, the first side portion 1232a may include a first side hole 1232ah. The first magnet may be positioned in the first side hole 1232ah. In addition, a length of the first side hole 1232ah may be smaller than a length of the first coil in the first direction.

In addition, the second side portion 1232b may include a second side hole 1232bh. The second magnet may be disposed in the second side hole 1232bh. In addition, a length of the second side hole 1232bh may be smaller than a length of the second coil in the first direction.

In addition, the 2-2 housing 1232 may include a housing hole 1232h disposed in any one of upper and lower portions thereof. Coupling may be facilitated through the housing hole 1232h, or inspection (for example, a visual inspection) for the first lens assembly and the second lens assembly may be performed.

In addition, the first guide grooves GG1a and GG1b positioned in the first side portion 1232a may extend in the third direction. In addition, the first guide grooves GGla and GG1b may have different shapes. For example, any one first guide groove GGla of the first guide grooves may be an inclined groove, and the other first guide groove GG1b may have a flat structure. The second guide grooves GG2a and GG2b may be equally applied. The first and second balls are mounted in the inclined groove and the flat structure, and thus the first lens assembly or the second lens assembly may move in the optical axis direction.

Referring to FIGS. 12 and 13, in the camera device according to the embodiment, an electromagnetic force DEM1 between the first magnet 1252a and the first coil 1251a is generated, and thus the first lens assembly 1222a may move along the rail positioned on an inner surface of the housing using the first ball B1 and the second ball B2 in a direction parallel to the optical axis direction, that is, in the third direction (Z axis direction) or a direction opposite to the third direction.

Specifically, in the camera device according to the embodiment, the first magnet 1252a may be provided in the first lens assembly 1222a in a, for example, vertical magnetization manner. For example, in the embodiment, both an N-pole and an S-pole of the first magnet 1252a may be positioned to face the first coil 1251a. Accordingly, each of the N-pole and the S-pole of the first magnet 1252a may be disposed to correspond to a region in which a current flows in the X axis direction or a direction opposite thereto in the first coil 1251a.

In the embodiment, when a magnetic force is applied from the N-pole of the first magnet 1252a in a direction opposite to the second direction (Y axis direction), and a current DE1 flows from the first coil 1251a corresponding to the N-pole to a direction opposite to the first direction (X axis direction), the electromagnetic force DEM1 may be applied in the third direction (Z axis direction) according to an interaction (for example, Fleming's left-hand rule) of an electromagnetic force.

In addition, in the embodiment, when a magnetic force is applied from the S-pole of the first magnet 1252a to the second direction (Y axis direction), and a current DE1 flows from the first coil 1251a corresponding to the S-pole to the first direction (X axis direction), an electromagnetic force DEM1 may be applied in the Z axis direction according to an interaction of an electromagnetic force.

In this case, since the first coil 1251a is fixed to the side portion of the second housing, the first lens assembly 1222a in which the first magnet 1252a is disposed may move in a direction opposite to the Z axis direction by the electromagnetic force DEM1 according to a current direction. That is, the second driving magnet may move in a direction opposite to that of the electromagnetic force applied to the second driving coil. In addition, a direction of an electromagnetic force may be changed according to a current of the coil and a magnetic force of the magnet.

Accordingly, the first lens assembly 1222a may move along the rail positioned on the inner surface of the housing using the first ball B1 and the second ball B2 in a direction (two directions) parallel to the third direction or the optical axis direction. In this case, the electromagnetic force DEM1 may be controlled in proportion to the current DE1 applied to the first coil 1251a.

The first lens assembly 1222a or the second lens assembly 1222b may include the first recesses RS1 in which the first balls B1 are mounted. In addition, the first lens assembly 1222a or the second lens assembly 1222b may include the second recesses RS2 in which the second balls B2 are mounted. A length of each of the first recesses RS1 may be preset in the optical axis direction (Z axis direction). In addition, a length of the second recess RS2 may be preset in the optical axis direction (Z axis direction). Accordingly, a moving distance of each of the first ball B1 and the second ball B2 may be adjusted in one recess in the optical axis direction. In other words, the first recess RS1 or the second recess RS2 may be a stopper for the first or second ball B1 or B2.

In addition, in the camera device according to the embodiment, the second magnet 1252b may be provided in the second lens assembly 1222b in a, for example, a vertical magnetization manner or the like. For example, in the embodiment, both an N-pole and an S-pole of the second magnet 1252b may be positioned to face the second coil 1251b. Accordingly, each of the N-pole and S-pole of the second magnet 1252b may be disposed to correspond to a region in which a current flows in the X axis direction or a direction opposite thereto in the second coil 1251b.

In the embodiment, when a magnetic force DM2 is applied from the N-pole of the second magnet 1252b to the second direction (Y axis direction), and a current DE2 flows from the second coil 1251b corresponding to the N-pole to the first direction (X axis direction), an electromagnetic force DEM2 may be applied in the third direction (Z axis direction) according to an interaction (for example, Fleming's left-hand rule) of the electromagnetic force.

In addition, in the embodiment, when a magnetic force is applied from the S-pole of the second magnet 1252b to a direction opposite to the second direction (Y axis direction), and a current DE2 flows from the second coil 1251b corresponding to the S-pole to a direction opposite to the first direction (X axis direction), an electromagnetic force DEM2 may be applied in the Z axis direction according to an interaction of the electromagnetic force.

In this case, since the second coil 1251b is fixed to the side portion of the second housing, the second lens assembly 1222b on which the second magnet 1252b is disposed may move in a direction opposite to the Z axis direction by the electromagnetic force DEM2 according to a current direction. For example, as described above, a direction of an electromagnetic force may be changed according to a current of the coil and a magnetic force of the magnet. Accordingly, the second lens assembly 1222b may move along the rail positioned on an inner surface of the second housing using the second ball B2 in a direction parallel to the third direction (Z axis direction). In this case, the electromagnetic force DEM2 may be controlled in proportion to the current DE2 applied to the second coil 1251b.

Referring to FIG. 14, in the camera device according to the embodiment, the second driving part may provide driving forces F3A, F3B, F4A, and F4B to move the first lens assembly 1222a and the second lens assembly 1222b of lens part 1220 in the third direction (Z axis direction). The second driving part may include the second driving coils 1251 and the second driving magnets 1252 as described above. In addition, the lens part 1220 may be moved in the third direction (Z axis direction) by electromagnetic forces generated between the second driving coils 1251 and the second driving magnets 1252.

**In** this case, the first coil 1251a and the second coil 1251b may be disposed in the holes formed in the side portions (for example, the first side portion and the second side portion) of the second housing 1230. **In** addition, the second coil 1251b may be electrically connected to the first substrate 1271. The first coil 1251a may be electrically connected to the second substrate 1272. Accordingly, each of the first coil 1251a and the second coil 1251b may receive a drive signal (for example, a current) from a driving driver on a circuit substrate of the circuit substrate 1300 through the second substrate part 1270.

**In** this case, the first lens assembly 1222a in which the first magnet 1252a is mounted may be moved in the third direction (Z axis direction) by the electromagnetic forces F3A and F3B between the first coil 1251a and the first magnet 1252a. **In** addition, the second lens group 1221b mounted in the first lens assembly 1222a may also move in the third direction.

**In** addition, the second lens assembly 1222b in which the second magnet 1252b is mounted may be moved in the third direction (Z axis direction) by the electromagnetic forces F4A and F4B between the second coil 1251b and the second magnet 1252b. **In** addition, the third lens group 1221c mounted in the second lens assembly 1222b may also move in the third direction.

Accordingly, as described above, as the second lens group 1221b and the third lens group 1221c move, the focal length or the magnification of the optical system may be changed. In the embodiment, as the second lens group 1221b moves, the magnification may be changed. In other words, a zooming may be performed. In addition, as the third lens group 1221c moves, the focus may be adjusted. In other words, an AF may be performed. Due to such a configuration, the second camera actuator may be a fixed zoom or continuous zoom actuator.

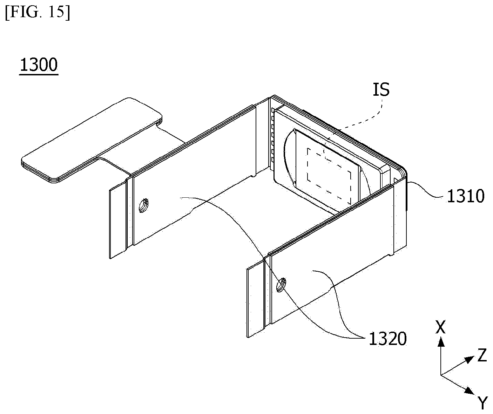

FIG. 15 is a schematic view illustrating the circuit substrate according to the embodiment.

Referring to FIG. 15, as described above, the circuit substrate 1300 according to the embodiment may include a first circuit substrate part 1310 and the second circuit substrate part 1320. The first circuit substrate part 1310 may be positioned under the base and coupled to the base. In addition, the image sensor IS may be disposed on the first circuit substrate part 1310. In addition, the first circuit substrate part 1310 and the image sensor IS may be electrically connected. That is, the base may be positioned on a rear end of the second camera actuator, and the image sensor and the circuit substrate (a first circuit substrate part) may be positioned on a rear end of the base. The base may include a filter (for example, an infrared filter), and the like.

In addition, the second circuit substrate part 1320 may be positioned on a side portion of the base. Particularly, the second circuit substrate part 1320 may be positioned on a first side portion of the base. Accordingly, the second circuit substrate part 1320 is positioned adjacent to the first coil positioned adjacent to the first side portion, and thus electrical connection therebetween may be easily performed. In addition, the second circuit substrate part 1320 may be positioned in a second side portion thereof. As described above, the second circuit substrate part 1320 may be provided as a plurality of the second circuit substrate parts 1320. However, the second circuit substrate part 1320 is not limited thereto and may also be disposed on only any one of the first side portion and the second side portion.

In addition, the circuit substrate 1300 may additionally include a fixed substrate (not shown) positioned on a side surface. Accordingly, even when the circuit substrate 1300 is formed of a flexible material, stiffness of the circuit substrate 1300 may be maintained due to by the fixed substrate and coupled to the base.

The second circuit substrate part 1320 of the circuit substrate 1300 may be positioned on a side portion of the second driving part 1250. The circuit substrate 1300 may be electrically connected to the first driving part and the second driving part. For example, the electrical connection may be implemented through surface-mount technology (SMT). However, the present invention is not limited to such a method.

The circuit substrate 1300 may include a circuit board having an electrically connectable wiring pattern such as a rigid printed circuit board (rigid PCB), a flexible PCB, a rigid-flexible PCB, or the like. However, the present invention is not limited to such a type.

In addition, the circuit substrate 1300 may be electrically connected to another camera module in a terminal or a processor in the terminal. Accordingly, the camera actuator and the camera device including the same may transmit and receive various signals in the terminal.

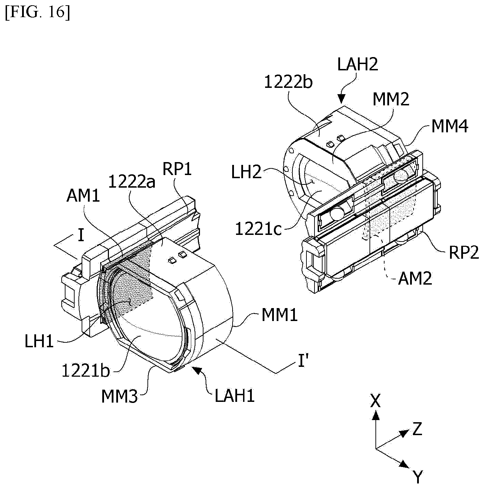

FIG. 16 is a perspective view illustrating a first lens assembly and a second lens assembly according to a first embodiment.

Referring to FIG. 16, a first lens assembly 1222a and a second lens assembly 1222b may be disposed to be spaced apart from each other in an optical axis direction (Z axis direction). In addition, the first lens assembly 1222a and the second lens assembly 1222b may be moved in the optical axis direction (Z axis direction) by a second driving part. For example, as the first lens assembly 1222a and the second lens assembly 1222b move, an AF or zoom function may be performed.

In addition, the first lens assembly 1222a may include a first lens holder LAH1 which holds and is coupled to the second lens group 1221b, a first rail part RP1, and a first adhesive member AM1. The first lens holder LAH1 may be coupled to the second lens group 1221b. In addition, the first lens holder LAH1 may include a first lens hole LH1 for accommodating the second lens group 1221b. That is, the second lens group 1221b including at least one lens may be dispose in the first lens hole LH1. The first lens holder LAH1 is the same as and is used interchangeably with an accommodation portion (for example, a first accommodation portion or second accommodation portion) which will be described below.

In addition, the first rail part RP1 may be positioned at one side of the first lens holder LAH1. In addition, the first adhesive member AM1 may be positioned between the first rail part RP1 and the first lens holder LAH1. The first rail part RP1 and the first lens holder LAH1 may be coupled using the first adhesive member AM1.

In addition, the first rail part RP1 may include a side plate on which a ball part is mounted and a wing part extending from the side plate. This will be described below.

In addition, the second lens assembly 1222b may include a second lens holder LAH2 which holds and is coupled to the third lens group 1221c. In addition, the second lens holder LAH2 may include a second lens hole LH2 for accommodating the third lens group 1221c. That is, at least one lens may be disposed in the second lens hole LH2.

In addition, a second rail part RP2 may be positioned at the other side of the second lens holder LAH2. The first rail part RP1 and the second rail part RP2 may be positioned opposite to each other. For example, the first rail part RP1 and the second rail part RP2 may be positioned to face each other.

In addition, a second adhesive member AM2 may be positioned between the second rail part RP2 and the second lens holder LAH2. The second rail part RP2 and the second lens holder LAH2 may be coupled using the second adhesive member AM2.

In addition, the second rail part RP2 may include a side plate on which a ball part is mounted and a wing part extending from the side plate. This will be described below.

In addition, at least one of the first lens assembly 1222a and the second lens assembly 1222b may have a structure in which an adhesive member is disposed between the lens holder and the rail part. Hereinafter, it will be described based on the first lens assembly 1222a. Accordingly, the description about the first lens assembly may be equally applied to the second lens assembly. For example, the description about the first rail part may be equally applied to the second rail part. In addition, the description about the first adhesive member may be equally applied to the second adhesive member. In addition, the description about the first lens holder may be equally applied to the second lens holder.

In the embodiment, each of the first lens assembly 1222a and the second lens assembly 1222b may include an adjacent outer surface. The first lens assembly 1222a may include a first outer surface MM1, and the second lens assembly 1222b may include a second outer surface MM2. The first outer surface MM1 may be a lower surface (or rear surface) of the first lens holder LAH1 based on the optical axis direction (Z axis direction). In addition, a third outer surface MM3, which will described below, may be an upper surface (or front surface) of the first lens holder LAH1. In addition, the second outer surface MM2 may be an upper surface (or front surface) of the second lens holder LAH2, and a fourth outer surface MM4 may be a lower surface (or a rear surface) of the second lens holder LAH2.

In addition, at least a part of the first outer surface MM1 and the second outer surface MM2 may overlap in the optical axis direction (Z axis direction). In the embodiment, at least a part of the first outer surface MM1 to the fourth outer surface MM4 may overlap in the optical axis direction (Z axis direction).

For example, a coupling member (not shown) may in contact with at least one of the first outer surface MM1 and the second outer surface MM2.

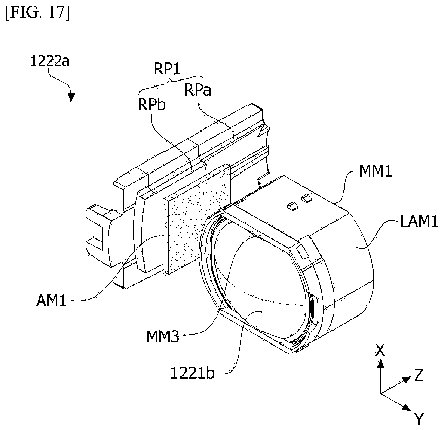

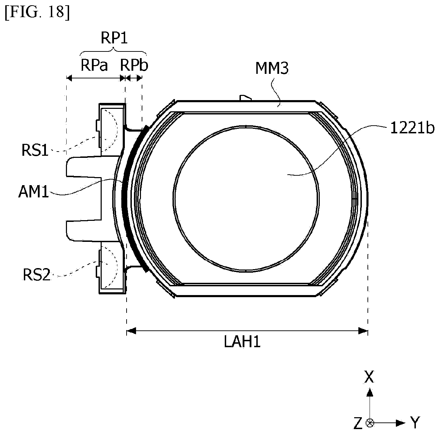

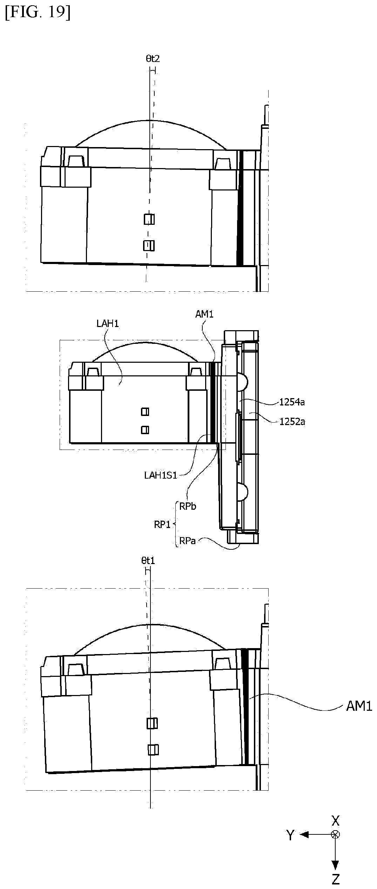

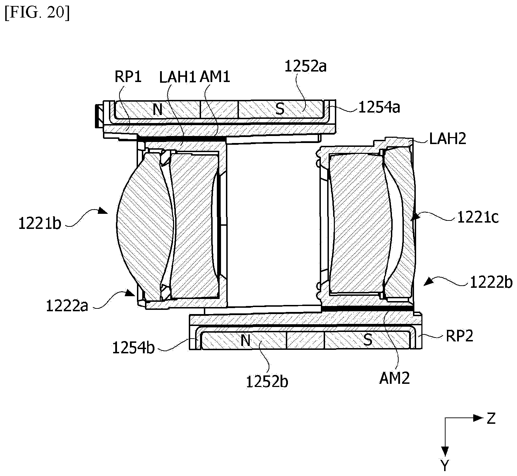

FIG. 17 is a perspective view illustrating the first lens holder, the first rail part, and the first adhesive member in the first lens assembly according to the first embodiment, and FIG. 18 is a front view illustrating the first lens holder, the first rail part, and the first adhesive member in the first lens assembly according to the first embodiment. FIG. 19 is a top view illustrating the first lens holder, the first rail part, and the first adhesive member in the first lens assembly according to the first embodiment, and FIG. 20 is a view illustrating the first lens assembly and the second lens assembly along line II' in FIG. 16.

Referring to FIGS. 17 to 19, in the first lens assembly 1222a according to the first embodiment, the adhesive member AM1 may be positioned between the first lens holder LAH1 and the first rail part RP1.

In addition, the first rail part RP1 may include a side plate RPa positioned at an outermost side and a wing part RPb extending from the side plate RPa. The content, which will be described below, may be equally applied to the second rail part RP2.

The side plate RPa may include a first recess RS1 and a second recess RS2 in an outermost surface described above. In addition, a first magnet 1252a may be positioned on the side plate RPa. In addition, a first coupling yoke 1254a may be positioned on the side plate RPa. The first magnet 1252a may be positioned on the first coupling yoke 1254a. In addition, the first coupling yoke 1254a may be coupled to an outer surface of the side plate RPa. The coupling may be implemented using one of various coupling members.

The wing part RPb may be positioned between the side plate RPa and the first lens holder LAH1 and may be in contact with the side plate RPa. In addition, the first adhesive member AM1 is positioned between the first lens holder LAH1 and the first rail part RP1. Accordingly, in the first lens assembly 1222a, the wing part RPb may be in contact with the first adhesive member AM1.

A thickness of the first adhesive member AM1 may be constant or changed in the optical axis direction (Z axis direction). For example, active alignment or optical axis arrangement of the first lens holder LAH1 may be performed after the first adhesive member AM1 is applied thereon. In this case, the first lens holder LAH1 may be tilted at a certain angle θₜ₁ or θₜ₂ with respect to the optical axis. In this case, the certain angle may be formed in at least one direction among a first direction (X axis direction), a second direction (Y axis direction), and a third direction (Z axis direction). That is, the first lens holder LAH1 may move in a direction perpendicular to an optical axis or along the optical axis. Accordingly, optical axis arrangement of the first lens holder LAH can be performed more easily. Accordingly, as described above, the first adhesive member AM1 may be changed in the optical axis direction (Z axis direction). In addition, this may be equally applied to other embodiments which will be described below. In addition, in other embodiments, a thickness of a first adhesive member AM1 may be changed in a second direction.

In addition, in the first lens assembly 1222a according to the first embodiment, the first lens holder LAH1 may include a lens holder surface LAH1S1 in contact with the wing part RPb. The lens holder surface LAH1S1 may be an outer surface of the first lens holder LAH1. In addition, the lens holder surface LAH1S1 may be positioned between the first lens holder LAH1 and the first adhesive member AM1. Alternatively, the lens holder surface LAH1S1 may be a surface of the first lens holder LAH1 facing the wing part RPb.

A lens holder surface of a first lens holder LAH1 may be changed according to an embodiment. In addition, in the present embodiment, the lens holder surface LAH1S1 of the first lens holder LAH1 may include a convex portion which is convex outward and a flat portion. In addition, an area of the convex portion of the lens holder surface LAH1S1 of the first lens holder LAH1 may be greater than an area of a concave portion. That is, the lens holder surface LAH1S1 of the first lens holder LAH1 may have a structure in which a central portion is convex. Due to such a configuration, the first lens holder LAH1 can be easily adjusted for active alignment. In other words, even when the first lens holder LAH1 is greatly tilted between the first lens holder LAH1 and the side plate RPa, the first lens holder LAH1 may not come into contact with the side plate RPa. That is, the first lens holder LAH1 may be coupled to the first rail part RP1 in a state in which the first lens holder LAH1 is tilted within an increased range.

In addition, the first adhesive member AM1 may overlap the first lens holder LAH1, the side plate RPa, and the wing part RPb in the second direction (Y axis direction).

In addition, the first adhesive member AM1 may also overlap the ball part and the first and second recesses in the second direction. In addition, the first adhesive member AM1 may overlap the first magnet 1252a and the first coupling yoke 1254a in the second direction.

Referring to FIG. 20, as described above, the second lens assembly 1222b may be positioned on a rear end of the first lens assembly 1222a. In addition, like the first lens assembly 1222a, the second lens assembly 1222b may also include a second lens holder LAH2 and the second rail part RP2. In addition, a second magnet 1252b and a second coupling yoke 1254b may be positioned on a side plate of the second rail part RP2.

In addition, at least one of the first lens assembly 1222a and the second lens assembly 1222b may include the adhesive members AM1 or AM2. For example, each of the first lens assembly 1222a and the second lens assembly 1222b may include the first adhesive member AM1 and the second adhesive member AM2, respectively. Accordingly, active alignment of the first lens holder LAH1 of the first lens assembly 1222a may be performed. In addition, active alignment of the second lens holder LAH2 of the second lens assembly 1222b may also be performed. In addition, the first adhesive member AM1 and the second adhesive member AM2 may be positioned to correspond to each other with respect to the optical axis. For example, the first adhesive member AM1 and the second adhesive member AM2 may be positioned at different sides with respect to the optical axis.

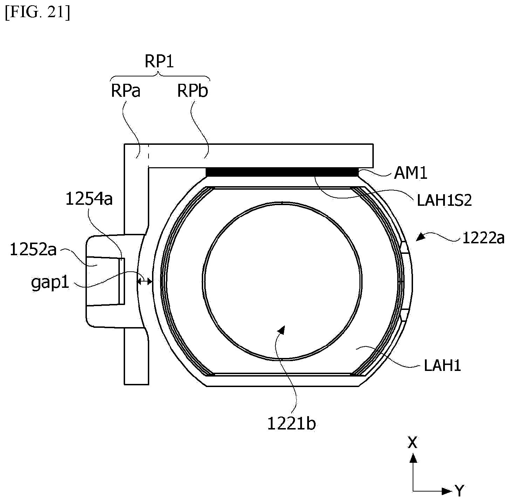

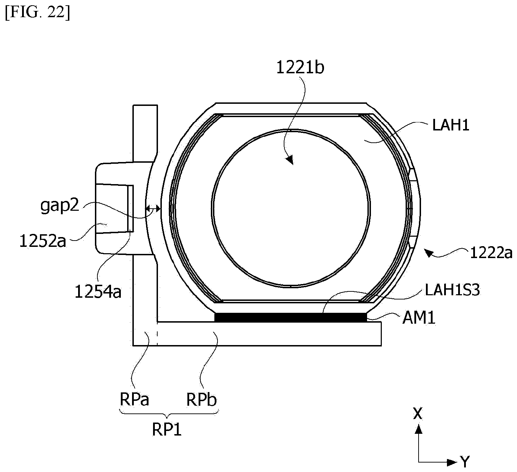

FIG. 21 is a front view illustrating a first lens holder, a first rail part, and a first adhesive member in a first lens assembly according to a second embodiment, and FIG. 22 is a front view illustrating a first lens holder, a first rail part, and a first adhesive member in a first lens assembly according to a third embodiment.

Referring to FIG. 21, in the second embodiment, a first lens assembly 1222a may include a first lens holder LAH1 which holds and is coupled to a second lens group 1221b, a first rail part RP1, and a first adhesive member AM1 as described above. In addition, the first lens holder LAH1 may be coupled to the second lens group 1221b. In addition, the first lens holder LAH1 may include a first lens hole LH1 for accommodating the second lens group 1221b. That is, the second lens group 1221b including at least one lens may be disposed in the first lens hole LH1.

In the present embodiment, the first rail part RP1 may include a side plate RPa and a wing part RPb extending from the side plate RPa in a second direction.

The wing part RPb may extend from the side plate RPa in the second direction and may overlap the first lens holder LAH1 in a first direction (X axis direction).

In addition, the wing part RPb may be disposed above or under the first lens holder LAH1. In the present embodiment, the wing part RPb may be positioned on the first lens holder LAH1.

In addition, the first adhesive member AM1 may be positioned between the wing part RPb and a lens holder surface LAH1S2 of the first lens holder LAH1. In the present embodiment, the lens holder surface LAH1S2 of the first lens holder LAH1 may correspond to an upper surface of the first lens holder LAH1.

In addition, the first adhesive member AM1 may overlap the wing part RPb and the first lens holder LAH1 in the first direction (X axis direction). Due to such a configuration, a length of the first lens assembly in the second direction (Y axis direction) is reduced, and thus a camera actuator can be miniaturized in one direction.

In addition, a thickness of the first adhesive member AM1 may be changed in the second direction or a third direction. As described above, active alignment or optical axis alignment of the first lens holder LAH1 may be performed after the first adhesive member AM1 is applied thereon. In this case, when the active alignment is performed, the thickness of the first adhesive member AM1 may also be changed to correspond to movement of the first lens holder LAH1.

In addition, in the first rail part RP1, the side plate RPa and the first lens holder LAH1 may be spaced a predetermined distance gap1 from each other in the second direction.

Referring to FIG. 22, in the third embodiment, a first lens assembly 1222a may include a first lens holder LAH1 which holds and is coupled to a second lens group 1221b, a first rail part RP1, and a first adhesive member AM1 as described above. In addition, the first lens holder LAH1 may be coupled to the second lens group 1221b. In addition, the first lens holder LAH1 may include a first lens hole LH1 for accommodating the second lens group 1221b. That is, the second lens group 1221b including at least one lens may be disposed in the first lens hole LH1.

In the present embodiment, the first rail part RP1 may include a side plate RPa and a wing part RPb extending from the side plate RPa in a second direction.

The wing part RPb may extend from the side plate RPa in the second direction and overlap the first lens holder LAH1 in a first direction (X axis direction).

In addition, the wing part RPb may be disposed above or under the first lens holder LAH1. In the present embodiment, the wing part RPb may be positioned under the first lens holder LAH1.

In addition, the first adhesive member AM1 may be positioned between the wing part RPb and a lens holder surface LAH1S3 of the first lens holder LAH1. In the present embodiment, the lens holder surface LAH1S3 of the first lens holder LAH1 may correspond to a lower surface of the first lens holder LAH1.

In addition, the first adhesive member AM1 may overlap the wing part RPb and the first lens holder LAH1 in the first direction (X axis direction). Due to such a configuration, a length of the first lens assembly in the second direction (Y axis direction) is reduced, and thus a camera actuator can be miniaturized in one direction.

In addition, a thickness of the first adhesive member AM1 may be changed in the second direction or a third direction. As described above, active alignment or optical axis alignment of the first lens holder LAH1 may be performed after the first adhesive member AM1 is applied thereon. In this case, when the active alignment is performed, the thickness of the first adhesive member AM1 may also be changed to correspond to movement of the first lens holder LAH1.

In addition, in the first rail part RP1, the side plate RPa and the first lens holder LAH1 may be spaced a predetermined distance gap2 from each other in the second direction.

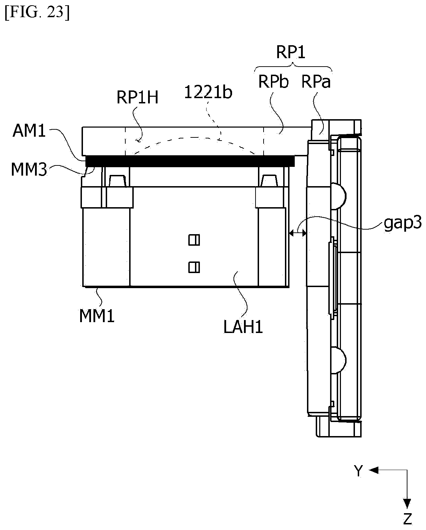

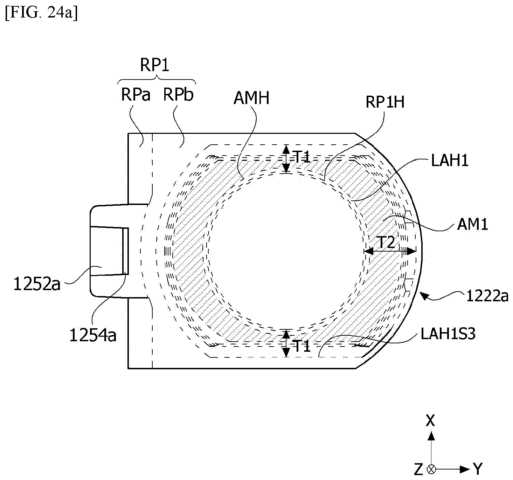

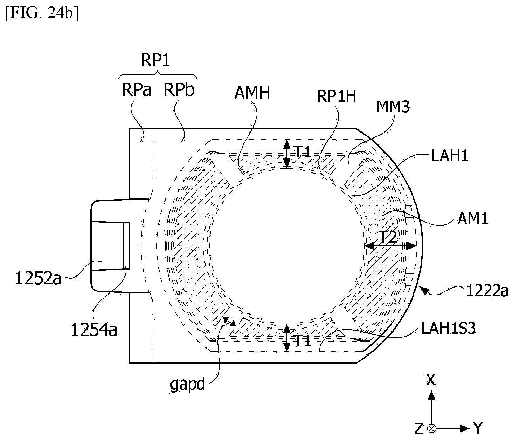

FIG. 23 is a top view illustrating a first lens holder, a first rail part, and a first adhesive member in a first lens assembly according to a fourth embodiment, FIG. 24A is a front view illustrating the first lens holder, the first rail part, and the first adhesive member in the first lens assembly according to the fourth embodiment, and FIG. 24B is a view illustrating a modified example of FIG. 24A.

Referring to FIGS. 23 and 24A, in the fourth embodiment, a first lens assembly 1222a may include a first lens holder LAH1 which holds and is coupled to a second lens group 1221b, a first rail part RP1, and a first adhesive member AM1 as described above. In addition, the first lens holder LAH1 may be coupled to the second lens group 1221b. In addition, the first lens holder LAH1 may include a first lens hole LH1 for accommodating the second lens group 1221b. That is, the second lens group 1221b including at least one lens may be disposed in the first lens hole LH1.

In the present embodiment, the first rail part RP1 may include a side plate RPa and a wing part RPb extending from the side plate RPa in a second direction.

The wing part RPb may be disposed on a front end or a rear end of the first lens holder LAH1. In the present embodiment, the wing part RPb may be positioned on the front end of the first lens holder LAH1.

That is, each of the wing part RPb and the first adhesive member AM1 may include a hole so that light enters the second lens group 1221b in an effective region. In the embodiment, the wing part RPb may include a wing hole RPaH. In addition, the first adhesive member AM1 may include a member hole AMH.

A size of the wing hole RPaH may differ from a size of the member hole AMH. For example, the size of the wing hole RPaH may be greater than the size of the member hole AMH. Accordingly, blocking of light provided to the second lens group 1221b can be suppressed.

In addition, in the wing part RPb, a thickness T1 of each of an upper portion and a lower portion may differ from a thickness T2 of a side portion. For example, the thickness T1 of each of the upper portion and the lower portion may be greater than the thickness T2 of the side portion. A thickness of the first adhesive member AM1 may also be changed according to a region to correspond to the region.

In addition, the first adhesive member AM1 in the present invention may have a closed loop or open loop. In the present embodiment, the first adhesive member AM1 may have the closed loop. In addition, the first adhesive member AM1 may have different thicknesses in each direction according to the active alignment.

In addition, the first adhesive member AM1 may be in contact with a third outer surface MM3 of the first lens holder LAH1. In addition, the first adhesive member AM1 may overlap the second lens group 1221b disposed on the front end thereof in the second direction. Due to such a configuration, the second lens group 1221b can be protected. In addition, in the present invention, the first adhesive member can absorb some shock. Accordingly, a camera actuator with improved reliability can be provided.

In addition, the wing part RPb, the first adhesive member AM1, and the first lens holder LAH1 may overlap in an optical axis direction (Z axis direction). The first adhesive member AM1 may also overlap the second lens group 1221b in the optical axis direction. In addition, the first adhesive member AM1 may not overlap a first magnet in the second direction.

In addition, in the first rail part RP1, the side plate RPa and the first lens holder LAH1 may be spaced a predetermined distance gap3 from each other the in the second direction.

Referring to FIG. 24B, in a first lens assembly according to the modified embodiment, a first adhesive member AM1 may have an open loop. Accordingly, when active alignment is performed, a first lens holder LAH1 can be easily tilted.

Except for this, the above-described content may be equally applied thereto.

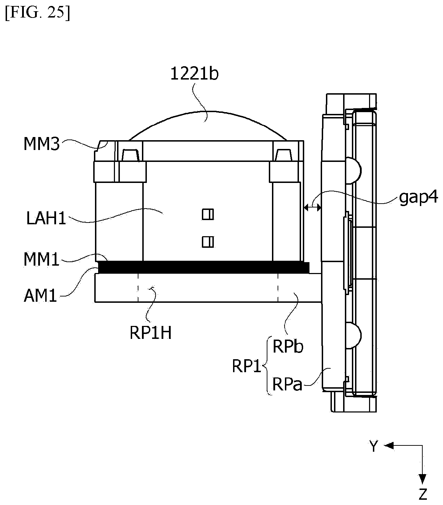

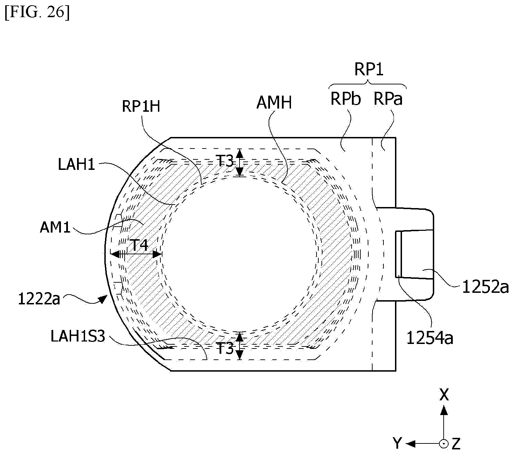

FIG. 25 is a top view illustrating a first lens holder, a first rail part, and a first adhesive member in a first lens assembly according to a fifth embodiment, and FIG. 26 is a rear view illustrating the first lens holder, the first rail part, and the first adhesive member in the first lens assembly according to the fifth embodiment;

Referring to FIGS. 25 and 26, in the fifth embodiment, a first lens assembly 1222a may include a first lens holder LAH1 which holds and is coupled to a second lens group 1221b, a first rail part RP1, and a first adhesive member AM1 as described above. In addition, the first lens holder LAH1 may be coupled to the second lens group 1221b. In addition, the first lens holder LAH1 may include a first lens hole LH1 for accommodating the second lens group 1221b. That is, the second lens group 1221b including at least one lens may be disposed in the first lens hole LH1.

In the present embodiment, the first rail part RP1 may include a side plate RPa and a wing part RPb extending from the side plate RPa in a second direction.

The wing part RPb may be disposed on a front end or rear end the first lens holder LAH1. In the present embodiment, the wing part RPb may be positioned behind the first lens holder LAH1.

That is, each of the wing part RPb and the first adhesive member AM1 may include a hole so that light passing through the second lens group 1221b is provided to the rear end without being blocked. In the embodiment, the wing part RPb may include a wing hole RPaH. In addition, the first adhesive member AM1 may include a member hole AMH.

A size of the wing hole RPaH may differ from a size of the member hole AMH. For example, the size of the wing hole RPaH may be greater than the size of the member hole AMH. Accordingly, blocking of light provided to the second lens group 1221b can be suppressed.

In addition, in the wing part RPb, a thickness T3 of each of an upper portion and a lower portion may differ from a thickness T4 of a side portion. For example, the thickness T3 of each of the upper portion and the lower portion may be smaller than the thickness T4 of the side portion. Accordingly, separation of the second lens group 1221b can be suppressed. In addition, a thickness of the first adhesive member AM1 may also be changed according to a region to correspond to the region.

In addition, in the present invention, the first adhesive member AM1 may have a closed loop or open loop. In the present embodiment, the first adhesive member AM1 may have the closed loop. In addition, the first adhesive member AM1 may have different thicknesses in each direction according to active alignment.

In addition, the first adhesive member AM1 may be in contact with a first outer surface MM1 of the first lens holder LAH1. In addition, in the present embodiment, the first adhesive member AM1 may not overlap the second lens group 1221b in the first lens holder LAH1 in the second direction.

In addition, the wing part RPb, the first adhesive member AM1, and the first lens holder LAH1 may overlap in an optical axis direction (Z axis direction). The first adhesive member AM1 may also overlap the second lens group 1221b in the optical axis direction. In addition, the first adhesive member AM1 may not overlap a first magnet in the second direction.

In addition, in the first rail part RP1, the side plate RPa and the first lens holder LAH1 may be spaced a predetermined distance gap4 from each other in the second direction.

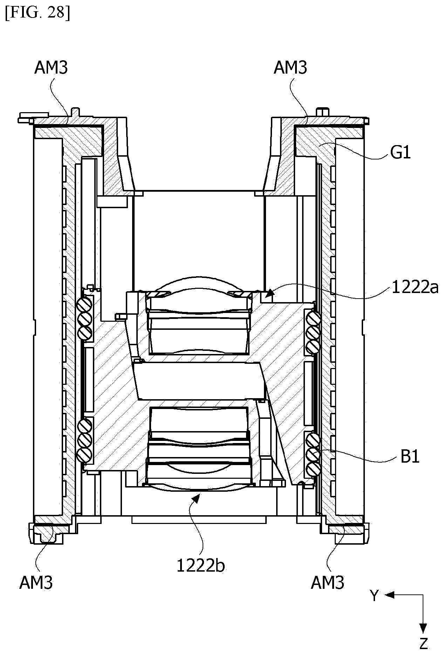

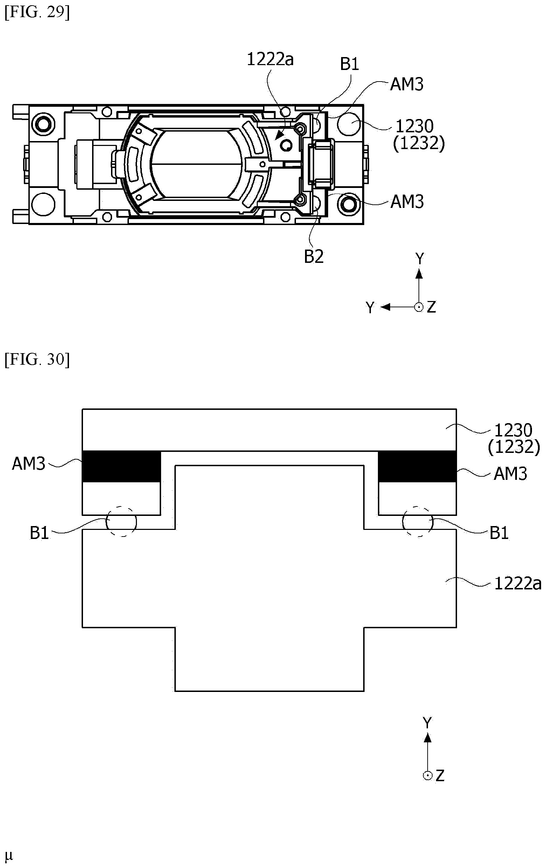

FIG. 27 is a schematic view illustrating a first lens assembly, a second housing, and a first adhesive member according to a sixth embodiment, FIG. 28 is a cross-sectional view illustrating the first lens assembly, the second housing, and the first adhesive member according to the sixth embodiment, and FIG. 29 is a rear view illustrating the first lens assembly, the second housing, and the first adhesive member according to the sixth embodiment. FIG. 30 is a schematic view illustrating a first lens assembly, a second housing, and a first adhesive member according to a seventh embodiment.

Referring to FIGS. 27 to 29, in the first lens assembly, the second housing, and the first adhesive member according to the sixth embodiment, a first adhesive member AM3 may be disposed between the second housing and a first guide part G1 described above. That is, the first guide part G1 and a second housing 1230 (or a 2-2 housing 1232) may be separated.

In addition, a first ball B1 and a second ball B2 may be positioned between a first lens assembly 1222a and the first guide part G1.

The first adhesive member AM3 may be positioned between the second housing and the first guide part G1, and thus the first guide part G1 and the first lens assembly 1222a may be easily tilted. Active alignment (or optical axis alignment) of the first lens assembly 1222a, that is, a second lens group in the first lens assembly, may be easily performed.

The first adhesive member AM3 may overlap the first guide part or the first lens assembly 1222a in a second direction according to a position of the first adhesive member AM3.

Referring to FIG. 30, in the first lens assembly, the second housing, and the first adhesive member according to the seventh embodiment, a first adhesive member AM3 may be disposed between the second housing and a first guide part G1 described above. As described above, the first guide part G1 and a second housing 1230 (or 2-2 housing 1232) may be separated. In addition, a first ball B1 and a second ball B2 may be positioned between a first lens assembly 1222a and the first guide part G1.

In the present embodiment, the first guide part G1 may be positioned on the first lens assembly 1222a. In addition, the first adhesive member AM3 may be positioned on the first guide part G1. In addition, the second housing 1230 may be positioned on the first adhesive member AM3. In addition, the first adhesive member AM3 may be positioned between the second housing and the first guide part G1, and thus the first guide part G1 and the first lens assembly 1222a may be easily tilted. Accordingly, active alignment (or optical axis alignment) of the first lens assembly 1222a, that is, a second lens group in the first lens assembly may be easily performed.

In the present embodiment, the first adhesive member AM3 may overlap the second housing 1230 (or 2-2 housing), the first guide part G1, and the first lens assembly 1222a in a first direction (X axis direction).

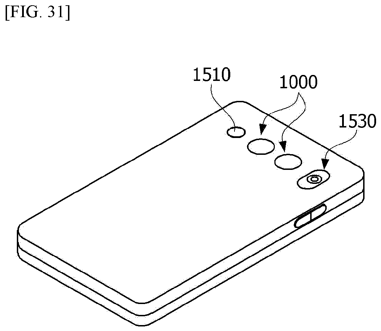

FIG. 31 is a perspective view illustrating a mobile terminal to which a camera module according to an embodiment is applied.

As illustrated in FIG. 31, a mobile terminal 1500 according to the embodiment may include camera modules 1000, a flash module 1530, and an AF device 1510.

Each of the camera modules 1000 may have an image capturing function and an AF function. For example, the camera module 1000 may have an AF function using an image.

The camera module 1000 processes image frames of still images or moving images obtained through an image sensor in an image capturing mode or video call mode.

The processed image frame may be displayed on a predetermined display and stored in a memory. A camera (not shown) may also be disposed in a front surface of a body of the mobile terminal.

For example, the camera modules 1000 may include a first camera module 1000 and a second camera module 1000, and an AF or zoom function and an OIS function may be implemented by the first camera module 1000.

The flash module 1530 may include a light-emitting element which emits light therein. The flash module 1530 may be operated by operation of the camera of the mobile terminal or control of a user.

The AF device 1510 may include one of packages of surface light-emitting laser elements as a light-emitting part.

The AF device 1510 may have an AF function using a laser. The AF device 1510 may be mainly used in a condition in which the AF function using the image of the camera module 1000 is degraded, for example, in a close distance of 10 m or less or in a dark environment.

The AF device 1510 may include a light-emitting part, which includes a vertical-cavity surface-emitting laser (VCSEL) semiconductor element, and a light-receiving part, which converts light energy into electrical energy, such as a photodiode.

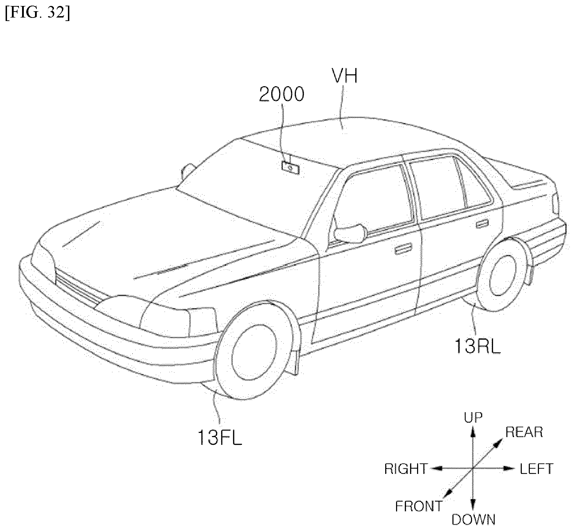

FIG. 32 is a perspective view illustrating a vehicle to which the camera module according to the embodiment is applied.

For example, FIG. 32 is an external view of the vehicle including a vehicle driving assistance device to which the camera module 1000 according to the embodiment is applied.

Referring to FIG. 32, a vehicle 700 of the embodiment may include wheels 13FL and 13FR, which are rotated by a power source, and a predetermined sensor. Although the sensor may be a camera sensor 2000, the present invention is not limited thereto.

The camera sensor 2000 may be a camera sensor to which the camera module 1000 according to the embodiment is applied. The vehicle 700 of the embodiment may obtain image information through the camera sensor 2000 which captures a forward image or surrounding image, determine a situation, in which lane lines are not identified, using the image information, and generate virtual lane lines when the lane lines are not identified.

For example, the camera sensor 2000 may obtain a forward image by capturing an image in front of the vehicle 700, and a processor (not shown) may analyze objects included in the forward image to obtain image information.

For example, when images of lane lines, adjacent vehicles, driving obstacles, and median strips, curbs, roadside trees, and the like which correspond to indirect road signs are included in the image captured by the camera sensor 2000, the processor may detect such objects so that the objects are included in the image information. **In** this case, the processor may obtain distance information from the objects detected through the camera sensor 2000 to supplement the image information.

The image information may be information about the objects captured in the images. The camera sensor 2000 may include an image sensor and an image processing module.

The camera sensor 2000 may process a still image or moving images obtained by the image sensor (for example, a complementary metal-oxide semiconductor (CMOS) or charge-coupled device (CCD)).

The image processing module may extract necessary information by processing the still image or moving images obtained through the image sensor and transmit the extracted information to the processor.

**In** this case, the camera sensor 2000 may further include a stereo camera in order to improve the measurement accuracy of an object and further secure information such as a distance between the vehicle 700 and the object and the like but is not limited thereto.

While the present invention has been mainly described above with reference to embodiments, it will be understood by those skilled in the art which the present invention is not limited to the embodiments, the embodiments are only exemplary, and various modifications and applications not exemplified above may be formed without departing from the essential features of the present embodiments. For example, components specifically described in the embodiments may be modified and implemented. In addition, it should be interpreted which differences related to modifications and applications fall within the scope of the present invention defined by the appended claims.

## Claims

1. A camera actuator comprising:
a housing;
a lens assembly which moves in an optical axis direction from the housing;
a ball part positioned between the housing and the lens assembly; and
a driving part which moves the lens assembly,
wherein the lens assembly includes a lens holder including at least one lens, a rail part including a side plate on which the ball part is mounted and a wing part extending from the side plate, and an adhesive member disposed between the rail part and the lens holder.

2. The camera actuator of claim 1, wherein the wing part is in contact with the adhesive member and the side plate.

3. The camera actuator of claim 1, wherein the wing part is disposed on a front end or rear end of the lens holder.

4. The camera actuator of claim 3, wherein the wing part includes a wing hole.

5. The camera actuator of claim 3, wherein the adhesive member has a closed loop or open loop structure.

6. The camera actuator of claim 3, wherein the adhesive member includes a member hole.

7. The camera actuator of claim 3, wherein a thickness of each of an upper portion and a lower portion in the wing part differs from a thickness of a side portion in the wing part.

8. The camera actuator of claim 3, wherein the wing part, the adhesive member, and the lens holder overlap in the optical axis direction.

9. The camera actuator of claim 1, wherein the wing part is disposed above or under the lens holder.

10. The camera actuator of claim 9, wherein the adhesive member overlaps the wing part and the lens holder.
